# EUROPEAN PATENT APPLICATION

(11) **EP 2 806 646 A2**
(43) Date of publication of application: **26.11.2014**
(21) Application number: 14168753.3
(22) Date of filing: 16.05.2014
(51) Int. Cl.: H04N 13/04

(54) **Multi-view image display apparatus with shutter glasses and control method thereof**

(30) Priority: 21.05.2013 KR 20130056983
(71) Applicant: Samsung Electronics Co., Ltd, Gyeonggi-do 443-742 (KR)
(72) Inventor: Choi, Nak Won, Gyeonggi-do (KR); Min, Kwan Sik, Gyeonggi-do (KR); Park, Jung Jin, Gyeonggi-do (KR)
(74) Representative: Hewett, Jonathan Michael Richard

(57) **Abstract**

Disclosed herein is a multi-view display apparatus with shutter glasses including a display module having a display panel and an active retarder panel disposed at a front of the display panel to adjust a polarization direction of image light output from the display panel and incident upon the active retarder panel such that the image light is transmitted through the active retarder panel and a drive module to determine whether the display module has been pivoted and to control, upon determining that the display module has been pivoted, voltage applied to the active retarder panel such that the polarization direction is adjusted. A user may view a three-dimensional (3D) image or a multi-view image (private image different from the image for another user) even when the display apparatus is pivoted. In addition, the user may view an image displayed on the display apparatus as a 3D image or a multi-view image even when the angle of an optics mechanism, i.e. glasses, is changed by 90 degrees according to change in posture of the user.

## Description

The present invention relates to a display apparatus to display a stereoscopic image, an optics mechanism to enable a user to view an image displayed on the display apparatus as a stereoscopic image, a control method of the display apparatus, and a control method of the optics mechanism.

A display apparatus displays visual and stereoscopic image information.

Recently, flat display devices, the weight and volume of which are considerably decreased, as compared with a cathode ray tube, enabling ease of installation, large format image realization, easy manufacture as a flat type product, and high image quality, have been developed.

The flat display devices may include a liquid crystal display (LCD), an electroluminescent display (ELD), a field emission display (FED), a plasma display panel (PDP), a thin film transistor LCD (TFT-LCD), a flexible display, and organic light emitting diodes (OLEDs).

Since user demand for a display apparatus to display a stereoscopic image providing high realization, i.e. a three-dimensional (3D) image, has increased in recent years, a 3D display apparatus, which displays a stereoscopic image, has been developed. In addition, user demand for a display apparatus to display a multi-view image such that a plurality of images may be viewed at full scale using one display apparatus has also increased.

Such a 3D display apparatus provides actual perception of an image. For this reason, 3D display apparatuses are now being widely used in entertainment, such as movies and games, and in educational applications, such as flight simulation. In addition, the 3D display apparatuses are also being used as medical display apparatuses.

The 3D display apparatus may be mainly classified as a stereoscopic glasses type display apparatus using special stereoscopic glasses as an optics mechanism or a non-glasses type display apparatus not using special stereoscopic glasses. Modes in which the special stereoscopic glasses are used may be classified into a shutter glasses (SG) mode, which is a time division manner in which a left eye image and a right eye image are selectively transmitted through the glasses with a time difference therebetween such that the two images are alternately output, and a patterned retarder mode, which is a spatial division manner in which pixels of a screen to output an image are spatially divided to display different images and a left eye image and a right eye image are selectively transmitted through linear or circular polarized glasses such that the images are displayed.

A multi-view display apparatus may display different images in a time division manner or a spatial division manner in the same manner as in the 3D display apparatus.

However, in a case in which the screen of the display apparatus is switched from a landscape mode to a portrait mode during display of a 3D image or different images, i.e. in a case in which the display apparatus is pivoted during realization of a 3D image, a polarization direction of a polarization panel of the display apparatus is changed with the result that the image may not be displayed as a 3D image.

It is an aspect of the present invention to provide a display apparatus including an active retarder panel to change a polarization direction when the display apparatus is pivoted such that a three-dimensional (3D) image or a multi-view image is displayed even when the display apparatus is pivoted, an optics mechanism, and a control method thereof.

It is another aspect of the present invention to provide a display apparatus that automatically or manually confirms pivotal rotation of the display apparatus to control driving of an active retarder panel, an optics mechanism, and a control method thereof.

Additional aspects of the invention will be set forth in part in the description which follows and, in part, will be obvious from the description, or may be learned by practice of the invention.

In accordance with one aspect of the present invention, a display apparatus includes a display module having a display panel and an active retarder panel disposed at a front of the display panel to adjust a polarization direction of image light output from the display panel and incident upon the active retarder panel such that the image light is transmitted through the active retarder panel and a drive module to determine whether the display module has been pivoted and to control, upon determining that the display module has been pivoted, voltage applied to the active retarder panel such that the polarization direction is adjusted.

The display apparatus may further include a user interface to allow input of a 3D image mode, wherein, in a case in which an image output mode of the display module is the 3D image mode, the drive module may drive the display panel such that a left eye image and a right eye image are displayed on the display panel through time division.

The display apparatus may further include a user interface to allow input of a multi-view image mode, wherein, in a case in which an image output mode of the display module is the multi-view image mode, the drive module may drive the display panel such that an image of a first channel and an image of a second channel are displayed on the display panel through time division.

The display apparatus may further include a detection unit to detect pivotal rotation of the display module, wherein the drive module may determine whether the display module has been pivoted based on a detected signal of the detection unit.

The display apparatus may further include a user interface to allow input of pivotal rotation of the display module, wherein the drive module may determine that the display module has been pivoted when the pivotal rotation of the display module is input through the user interface.

Upon determining that the display module has been pivoted, the drive module may determine that a screen mode of the display module has been switched from a first screen mode to a second screen mode and, in the second screen mode, switch an image of the display panel from a first display mode to a second display mode and apply first voltage to the active retarder panel to change the polarization direction of the image light from a first polarization direction to a second polarization direction.

Upon determining that the screen mode of the display module is the first screen mode, the drive module may switch the image of the display panel to the first display mode and apply second voltage to the active retarder panel to change the polarization direction of the image light from the second polarization direction to the first polarization direction.

The drive module may display a first image and a second image on the display panel through spatial division and adjust voltage applied per odd and even lines such that a polarization component of a first polarization direction and a polarization component of a second polarization direction are provided to the active retarder through the spatial division and, in a case in which the screen mode of the display module is a first screen mode, the drive module may adjust voltage applied per odd and even lines in a first direction and, in a case in which the screen mode of the display module is a second screen mode corresponding to the pivotal rotation, the drive module may adjust voltage applied per odd and even lines in a second direction, the first direction and the second direction being perpendicular to each other.

In accordance with another aspect of the present invention, an optics mechanism communicating with a display apparatus having a display panel and a polarization panel disposed at a front of the display panel to transmit image light output from the display panel in a predetermined polarization direction includes a first lens and a second lens, each of the first and second lenses having an active retarder panel, upon which the image light output from the display apparatus is incident, to adjust a polarization direction of the incident image light in response to a screen mode of the display apparatus such that the image light is transmitted through the active retarder panel, a shutter panel, upon which the image light transmitted through the active retarder panel is incident, to selectively transmit the image light in response to type of an image output from the display apparatus, and a polarization panel to selectively transmit the image light transmitted through the shutter panel and a drive module to adjust the polarization direction of the image light transmitted through each active retarder panel based on the screen mode of the display apparatus, to receive timing information regarding output of a first image and a second image output from the display apparatus, and to control voltage applied to the shutter panel of the first lens and the shutter panel of the second lens based on the received timing information regarding output of the first image and the second image such that the polarization direction of the image light transmitted through each shutter panel is adjusted.

The optics mechanism may further include a detection unit to detect pivotal rotation of the first lens and the second lens, wherein, upon detecting the pivotal rotation of the first lens and the second lens, the drive module may control voltage applied to each active retarder panel to change the polarization direction by 90 degrees.

The optics mechanism may further include an input unit to allow input of pivotal rotation of the display module, wherein the drive module may control voltage applied to each active retarder panel to change the polarization direction by 90 degrees when the pivotal rotation of the display module is input.

The optics mechanism may further include an input unit to allow input of a 3D image mode or a multi-view image mode, wherein the drive module may alternately drive on the shutter panel of the first lens and the shutter panel of the second lens when the 3D image mode is input and simultaneously drive on the shutter panel of the first lens and the shutter panel of the second lens when the multi-view image mode is input.

The drive module may apply first voltage to the shutter panel of the first lens when the first lens is driven on and the first voltage to the shutter panel of the second lens when the second lens is driven on, the shutter panel of the first lens and the shutter panel of the second lens being alternately driven on.

The drive module may apply second voltage to the shutter panel of the first lens when the first lens is driven off and the second voltage to the shutter panel of the second lens when the second lens is driven off, the shutter panel of the first lens and the shutter panel of the second lens being alternately driven off.

The input unit may allow input of any one of first and second channels in the multi-view image mode, and the drive module may apply first voltage to the shutter panel of the first lens and the shutter panel of the second lens when the first lens and the second lens are driven on, the shutter panel of the first lens and the shutter panel of the second lens being simultaneously driven on.

The drive module may apply second voltage to the shutter panel of the first lens and the shutter panel of the second lens when the first lens and the second lens are driven off, the shutter panel of the first lens and the shutter panel of the second lens being simultaneously driven off.

The drive module may drive on the shutter panel of the first lens and the shutter panel of the second lens at timing of outputting an image of the input channel and drives off the shutter panel of the first lens and the shutter panel of the second lens at timing of outputting an image of the channel different from the input channel.

In accordance with another aspect of the present invention, a control method of a display apparatus includes allowing input of an image output mode to be output through a display panel, in a case in which the image output mode is a 3D image mode or a multi-view image mode, alternately outputting a first image and a second image output through the display panel in a first display mode through time division, applying first voltage to an active retarder panel such that image light of the display panel incident upon the active retarder panel is transmitted in a first polarization direction, determining whether the display panel has been pivoted, upon determining that the display module has been pivoted and thus a screen mode of the display panel has been switched from a first screen mode to a second screen mode, alternately outputting the first image and the second image in a second display mode through time division, and applying second voltage higher than the first voltage applied to the active retarder panel such that the image light of the display panel incident upon the active retarder panel is transmitted in a second polarization direction.

The first polarization direction and the second polarization direction may be perpendicular to each other.

The control method may further include displaying a left eye image as the first image and a right eye image as the second image through time division in a case in which the image output mode is the 3D image mode

The control method may further include displaying an image of a first channel as the first image and an image of a second channel as the second image through time division in a case in which the image output mode is the multi-view image mode.

In accordance with another aspect of the present invention, a control method of an optics mechanism communicating with a display apparatus to output a left eye image and a right eye image through time division includes receiving information regarding a screen mode from the display apparatus, determining whether the received screen mode is a first screen mode or a second screen mode, upon determining that the screen mode of the display apparatus is the first screen mode, adjusting voltage applied to an active retarder panel of a left eye lens and an active retarder panel of a right eye lens to a first level to drive on a shutter panel of the left eye lens and a shutter panel of the right eye lens, upon determining that the screen mode of the display apparatus is the second screen mode, adjusting voltage applied to the shutter panel of the left eye lens and the shutter panel of the right eye lens to a second level to drive on the active retarder panel of the left eye lens and the active retarder panel of the right eye lens, and alternately driving on the shutter panel of the left eye lens and the shutter panel of the right eye lens based on timing of outputting the left eye image and timing of outputting the right eye image, the voltage of the first level being lower than the voltage of the second level.

The control method may further include determining whether the optics mechanism has been pivoted through a detection unit.

In accordance with a further aspect of the present invention, a control method of an optics mechanism communicating with a display apparatus to output an image of a first channel and an image of a second channel through time division includes allowing selection of any one of the first and second channels, receiving information regarding a screen mode from the display apparatus, determining whether the received screen mode is a first screen mode or a second screen mode, upon determining that the screen mode of the display apparatus is the first screen mode, adjusting voltage applied to an active retarder panel of a left eye lens and an active retarder panel of a right eye lens to a first level, upon determining that the screen mode of the display apparatus is the second screen mode, adjusting voltage applied to the active retarder panel of the left eye lens and the active retarder panel of the right eye lens to a second level, and simultaneously driving on a shutter panel of the left eye lens and a shutter panel of the right eye lens based on timing of outputting the image of the first channel and timing of outputting the image of the second channel such that the shutter panel of the left eye lens and the shutter panel of the right eye lens are simultaneously driven on at timing of outputting an image of the selected channel and the shutter panel of the left eye lens and the shutter panel of the right eye lens simultaneously driven off at timing of outputting an image of the channel different from the selected channel, the voltage of the first level being lower than the voltage of the second level.

The control method may further include determining whether the optics mechanism has been pivoted through a detection unit.

These and/or other aspects of the invention will become apparent and more readily appreciated from the following description of the embodiments, taken in conjunction with the accompanying drawings of which:
FIGS. 1A to 1C are views illustrating a display apparatus provided at an imaging system according to an embodiment of the present invention;
FIGS. 2A and 2B are views illustrating a display module provided at the display apparatus of the imaging system according to the embodiment of the present invention;
FIG. 3 is a view illustrating an example of a three-dimensional image displayed on the imaging system according to the embodiment of the present invention;
FIG. 4 is a view illustrating the display module provided at the display apparatus of the imaging system according to the embodiment of the present invention in detail;
FIG. 5 is a view illustrating an active retarder panel of the display module provided at the display apparatus of the imaging system according to the embodiment of the present invention;
FIGS. 6A and 6B are views illustrating polarization directions according to pivotal rotation of the display apparatus of the imaging system according to the embodiment of the present invention;
FIG. 7 is a view illustrating another example of the three-dimensional image displayed on the imaging system according to the embodiment of the present invention;
FIGS. 8A to 8D are views illustrating an example of glasses as an optics mechanism provided at the imaging system according to the embodiment of the present invention and polarization directions;
FIG. 9 is a view illustrating another example of the glasses as the optics mechanism provided at the imaging system according to the embodiment of the present invention;
FIG. 10 is a control block diagram of the imaging system according to the embodiment of the present invention;
FIG. 11 is a control flowchart of the imaging system according to the embodiment of the present invention;
FIGS. 12A and 12B are views illustrating voltage applied to the active retarder panel according to pivotal rotation of the display apparatus provided at the imaging system according to the embodiment of the present invention;
FIG. 13 is a control block diagram of an imaging system according to another embodiment of the present invention;
FIGS. 14A and 14B are views illustrating directions of an image and directions of polarized light output from a display panel and an active retarder panel according to pivotal rotation of a display apparatus provided at the imaging system according to the embodiment of the present invention;
FIGS. 15A and 15B are views illustrating a display apparatus provided at an imaging system according to a further embodiment of the present invention;
FIGS. 16A to 16C are views illustrating an optics mechanism provided at the imaging system according to the embodiment of the present invention;
FIG. 17 is a control block diagram of the imaging system according to the embodiment of the present invention;
FIG. 18 is a control flowchart of the optics mechanism provided at the imaging system according to the embodiment of the present invention;
FIGS. 19 and 20 are views illustrating voltage applied to an active retarder panel of the optics mechanism according to pivotal rotation of a display panel provided at the imaging system according to the embodiment of the present invention;
FIG. 21 is a control flowchart of the optics mechanism provided at the imaging system according to the embodiment of the present invention; and
FIGS. 22 and 23 are views illustrating voltage applied to active retarder panels of a plurality of optics mechanisms according to pivotal rotation of the display panel provided at the imaging system according to the embodiment of the present invention.

Reference will now be made in detail to the embodiments of the present invention, examples of which are illustrated in the accompanying drawings, wherein like reference numerals refer to like elements throughout.

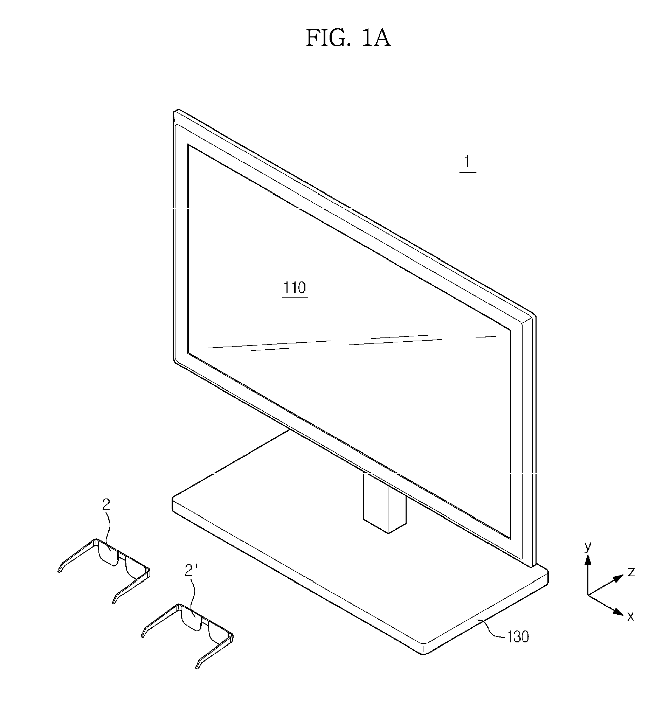

FIGS. 1A to 1C are views illustrating an imaging system according to an embodiment of the present invention.

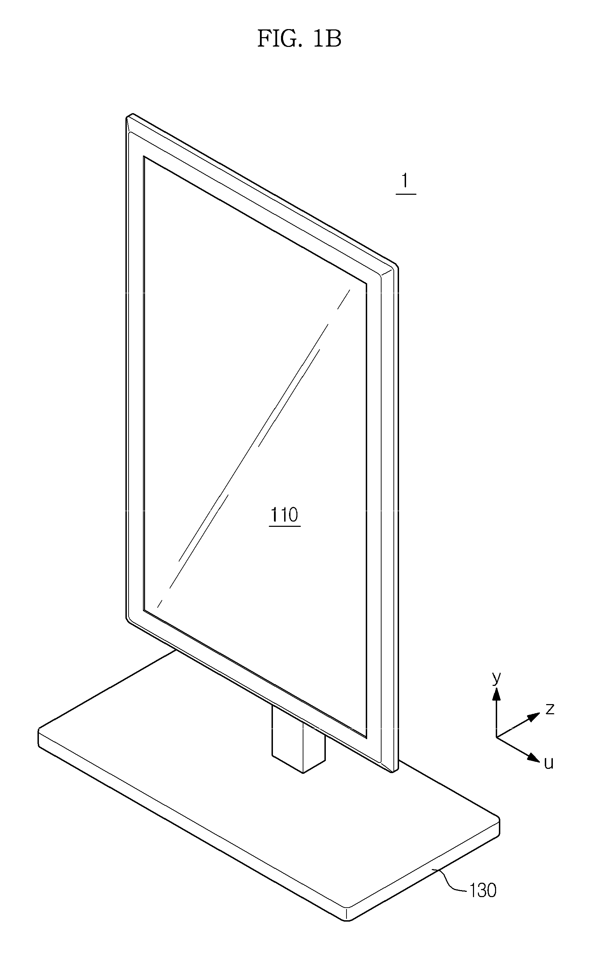

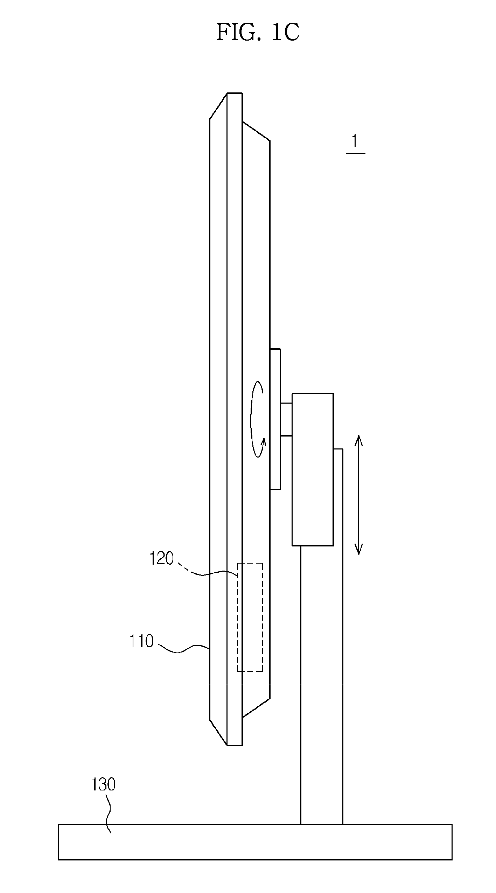

FIGS. 1A and 1B are front views of a display apparatus provided at the imaging system and FIG. 1C is a side view of the display apparatus provided at the imaging system.

The display apparatus 1 may be classified as a non-portable display apparatus, such as a monitor of a personal computer (PC), a television, or a monitor of a medical imaging device, or a portable display apparatus, such as a laptop computer, a tablet PC, or a mobile terminal.

The display apparatus 1 includes a main body 100 to selectively display a two-dimensional (2D) image and a visual and stereoscopic image, i.e. a three-dimensional (3D) image.

In addition, the display apparatus 1 may display a multi-view image to display two or more different images of different channels without change of resolution.

Sound may be output from the main body 100 of the display apparatus 1. Alternatively, sound may be output through a device provided outside the display apparatus 1.

The display apparatus 1 further includes an optics mechanism 2, such as glasses, to enable a user to view an image displayed on the display apparatus 1 as a 3D image.

In addition, a plurality of optics mechanisms, such as glasses 2 and 2', is further provided to enable users to view a multi-view image displayed on the display apparatus, respectively. The glasses 2 and 2' display a multi-view image of different channels.

In a case in which the display apparatus 1 is not portable, the display apparatus 1 further includes a stand 130 mounted to the main body 100 to support the main body 100.

The main body 100 is separately mounted to the stand 130.

In addition, the main body 100 is mounted to the stand 130 such that the main body 100 is linearly moveable or rotatable.

As shown in FIGS. 1A and 1B, the main body 100 mounted to the stand 130 may be pivoted between horizontal (X) and vertical (Y) axes.

In a case in which the main body 100 is rotated by 90 degrees, a vertically long document may be easily edited, a vertically long picture file may be easily viewed, or vertically long picture file may be viewed at once during web surfing. That is, documents and pictures may be easily and conveniently read.

As shown in FIG. 1C, the main body 100 mounted to the stand 130 may be elevated in a Z axis thereof. In addition, the main body 100 mounted to the stand 130 may be tilted about the X axis thereof and swiveled about the Y axis thereof.

The main body 100 of the display apparatus 1 includes a display module 110 to display an image and a drive module 120 to control display of an image on the display module 100.

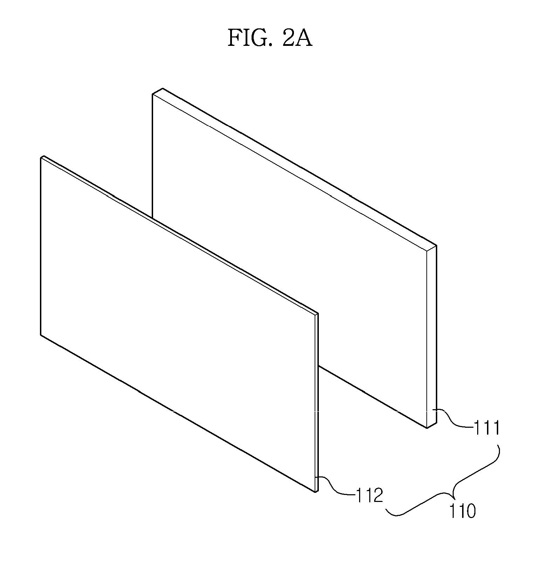

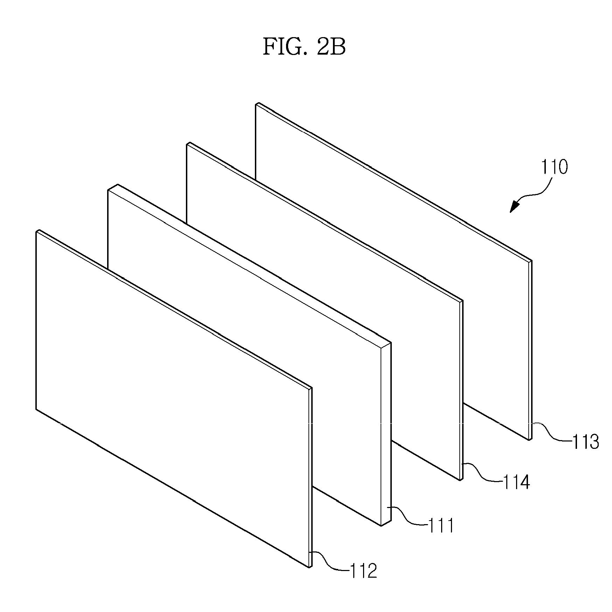

Hereinafter, the display module 110 will be described with reference to FIGS. 2A and 2B.

As shown in FIG. 2A, the display module 110 includes a display panel 111 to display an image and an active retarder panel 112 disposed at the front of the display panel 111.

The display panel 111 may be implemented by an electroluminescent display (ELD), such as organic light emitting diodes (OLEDs) or inorganic field light emitting devices, a liquid crystal display (LCD), a field emission display (FED), a plasma display panel (PDP), a thin film transistor LCD (TFT-LCD), or an electrophoretic display (EPD).

For example, in a case in which the display panel 111 of the display module 110 is implemented by OLEDs or a PDP, which is a self-emissive display, the display module 110 includes an active retarder panel 112 disposed at the front of the display panel 111.

In addition, the display module 110 may further include a polarization panel disposed between the display panel 111 and the active retarder panel 112 to polarize image light output from the display panel 111 in one direction.

On the other hand, in a case in which the display panel 111 of the display module 110 is implemented by an LCD as shown in FIG. 2B, the display module 110 may further include a backlight unit 113 disposed at the rear or the side of the display panel 111 to supply light to the display panel 111 and a polarization panel 114 disposed between the backlight unit 113 and the display panel 111 to guide non-polarized light supplied from the backlight unit 113 to the display panel 111 in a first polarization axis direction or a second polarization axis direction.

The backlight unit 113 may be a direct type backlight unit or an edge type backlight unit.

The display module having the LCD panel operates according to the following principle. Non-polarized light emitted from the backlight unit 113 passes through the polarization panel 114 and only light polarized in one direction is incident upon a liquid crystal cell of the display panel 111. Intensity of light transmitted through the display panel is adjusted according to a polarization axis rotation degree of the incident light to adjust a gray scale between black and white.

That is, the display panel 111 of the display module 110 does not self-emit light and thus transmittance and color of the light emitted from the backlight unit 113 are adjusted to display an image.

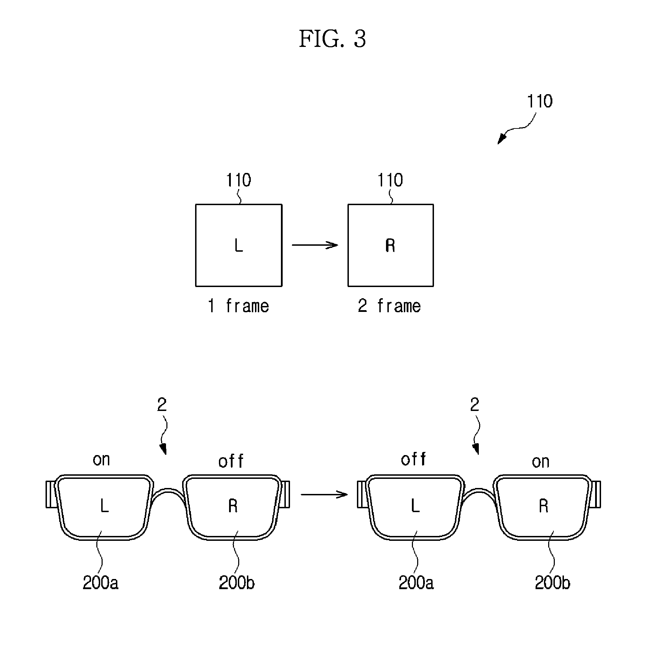

As shown in FIG. 3, the display panel 111 of the display module 110 displays a left eye image and a right eye image based on time division during a time to output one frame to display a 3D image. At this time, the active retarder panel 112 provides a polarization component of the same direction to the left eye image and a right eye.

Left and right lenses of the optics mechanism, i.e. the glasses 2, are driven at different times. A left lens 200a is driven on when a left eye image is output from the display module and a right lens 200b is driven on when a right eye image is output from the display module such that each user sequentially views the left eye image and the right eye image.

That is, the glasses 2 are synchronized with an image signal applied to the display panel to change on/off timing of the left lens and the right lens. Details of the glasses 2 will hereinafter be described.

In a case in which the display panel 111 displays two images of different channels, i.e. a multi-view image, the display panel 111 displays a first image of a first channel during a time to output one frame and displays a second image of a second channel during a time to output the next frame. At this time, the glasses 2 are driven on during a time to display the first image and the glasses 2' are driven on during a time to display the second image.

Hereinafter, the display module 110 having the LCD panel 111 will be described in more detail.

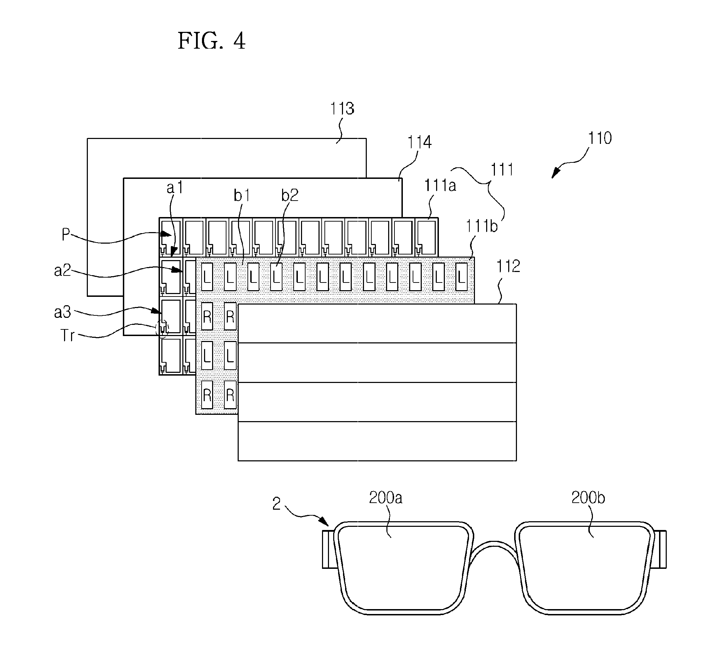

As shown in FIG. 4, the display panel 111 includes a thin film transistor (TFT) array substrate 111a and a color filter array substrate 111b opposite the TFT array substrate 111a. A liquid crystal layer is disposed between the TFT array substrate 111a and the color filter array substrate 111b.

The TFT array substrate 111a includes data lines a2 and gate lines (or scan lines) a1 intersecting each other, thin film transistors Tr formed at intersections between the gate lines a1 and the data lines a2, pixel electrodes a3 defined by the data lines and the gate lines in the form of a matrix, and storage capacitors Cst to maintain voltage of a liquid crystal cell.

The thin film transistors transmit data voltage applied via the data lines to the pixel electrodes a3 of the liquid crystal cell in response to scan pulses from the gate lines.

The color filter array substrate 111b includes a black matrix b1 corresponding to boundaries of pixel regions p, color filters b2 including color patterns of red, green, and blue sequentially corresponding to the pixel regions p, and a common electrode (not shown).

In a vertical field driving mode, such as a twisted nematic (TN) mode or a vertical alignment (VA) mode, the common electrode is formed at the color filter array substrate. In a horizontal field driving mode, such as an in plane switching (IPS) mode or a fringe field switching (FFS) mode, the common electrode is formed at the TFT array substrate together with the pixel electrodes.

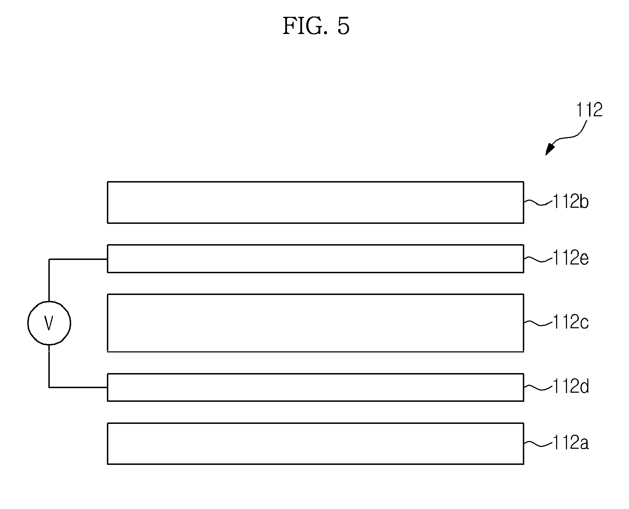

The active retarder panel 112 functions to output image light output from the display panel in at least one polarization direction. Details of the active retarder panel 112 will be described with reference to FIG. 5.

As shown in FIG. 5, the active retarder panel 112 includes a first substrate 112a, a second substrate 112b opposite the first substrate, and a liquid crystal cell 112c disposed between the first substrate and the second substrate.

The active retarder panel 112 further includes a first electrode unit 112d disposed between the first substrate 112a and the liquid crystal cell and a second electrode unit 112e disposed between the second substrate 112b and the liquid crystal cell. Voltage is applied to the first electrode unit and the second electrode unit.

The first electrode unit 112d and the second electrode unit 112e each include a plurality of electrodes, which may be formed of a transparent conductive material, such as ITO, and may be arranged vertically or horizontally in the form of a slit.

The active retarder panel 112 adjusts voltage applied to the first electrode unit and the second electrode unit according to pivotal rotation of the display panel 111 to change an arrangement direction of liquid crystal molecules in the liquid crystal cell 112c such that a direction of polarized light output through the active retarder panel 112 is changed.

Before pivotal rotation, the display panel 111 displays an image in a first display mode. After pivotal rotation, the display panel 111 pivots an image and displays the pivoted image in a second display mode.

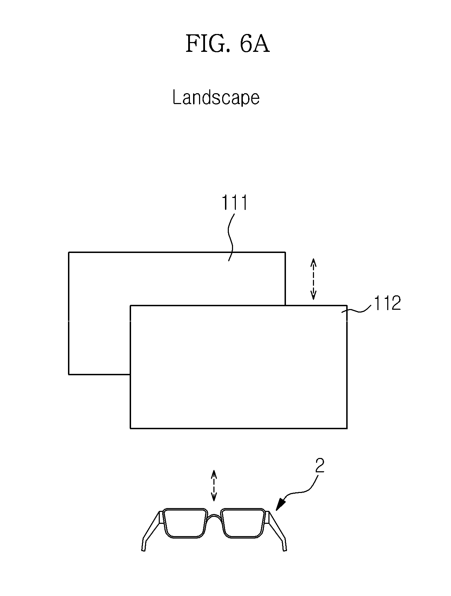

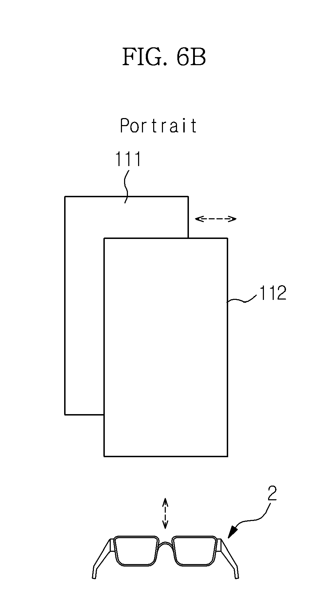

That is, the polarization direction of the active retarder panel 112 is changed according to pivotal rotation of the display panel 111 to equally maintain the polarization direction of image light output from the display module, which will hereinafter be described with reference to FIG. 6.

As shown in FIGS. 6A and 6B, voltage applied to the first electrode unit 112d and the second electrode unit 112e of the active retarder panel 112 is changed depending upon whether the display panel 111 is driven in a landscape mode or a portrait mode.

In a case in which the display panel 111 is driven in a landscape mode as shown in FIG. 6A, reference voltage is applied to the first electrode unit 112d formed at the first substrate 112a and high voltage is applied to the second electrode unit 112e formed at the second substrate 112b to maintain the direction of polarized light output through the display module such that a 3D image or a multi-view image is displayed.

In a case in which the display panel 111 is driven in a portrait mode as shown in FIG. 6B, reference voltage is applied to the first electrode unit 112d of the active retarder panel 112 and low voltage is applied to the second electrode unit 112e of the active retarder panel 112 to change an arrangement direction of liquid crystal molecules in the liquid crystal cell of the active retarder panel 112 such that the polarization direction is changed. As a result, the direction of polarized light output through the display module is changed such that a 3D image or a multi-view image is displayed.

A phase delay difference of λ/2 is present between the polarization direction when high voltage is applied to the active retarder panel and the polarization direction when low voltage is applied to the active retarder panel.

That is, arrangement of the liquid crystal molecules is changed using a potential difference between the two substrates of the active retarder panel 112 to maintain polarized light output through the display module in a predetermined polarization direction. As a result, a 3D or multi-view image output from the display module 110 may be displayed in both the landscape mode and the portrait mode.

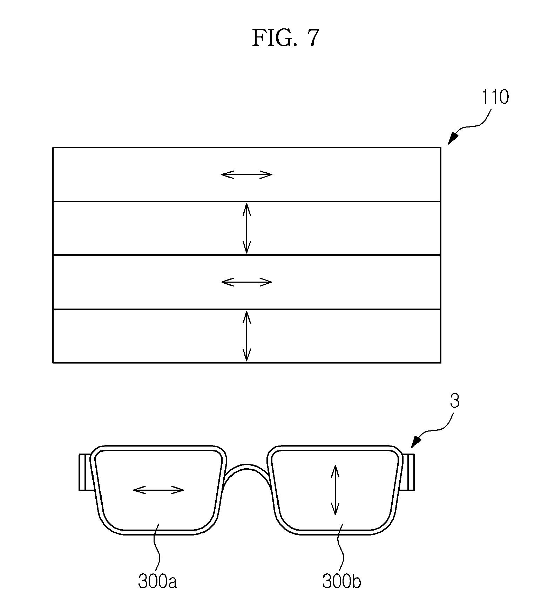

In another example, as shown in FIG. 7, the display panel 111 of the display module 110 may display a left eye image and a right eye image in one frame alternately per line, i.e. based on spatial division, to display a 3D image.

The display panel 111 of the display module 110 displays a spatially divided left eye image as an image having a vertical polarization component and a spatially divided right eye image as an image having a horizontal polarization component.

The display panel 111 applies a left eye image incident upon a left eye of a user to the pixel regions P located at odd pixel lines and a right eye image incident upon a right eye of the user to the pixel regions P located at even pixel lines.

The active retarder panel 112 is disposed at the front of the display panel 111 to provide orthogonal polarization components to the two images.

In addition, in a case in which the display panel 111 is an LCD panel, an image displayed on the display panel already has a polarization component in a fixed direction. Consequently, the active retarder panel 112 rotates the polarization direction of one of the two images by 90 degrees and allows the other image to pass therethrough such that the two images have orthogonal polarization components.

That is, the active retarder panel 112 rotates the polarization direction of one of the left and right eye images alternately displayed on the display panel 111 in the liquid crystal cell by 90 degrees.

On the other hand, in a case in which an image displayed on the display panel does not have a polarization component as in a PDP, an FED, or a cathode ray tube (CRT), the active retarder panel functions as two polarization plates having orthogonal polarization components and thus provides different polarization components to the left eye image and the right eye image.

That is, the active retarder panel 112 polarizes light emitted from the display panel 111 such that the light has a first polarization direction corresponding to the pixel regions P located at the odd pixel lines and a second polarization direction corresponding to the pixel regions P located at the even pixel lines in the horizontal direction.

In this way, the left eye image and the right eye image are alternately displayed on the display panel 111 on a per-horizontal line basis and characteristics of polarized light incident upon the glasses 2 are changed through the active retarder panel 112. As a result, the glasses 2 spatially separate the left eye image and the right eye image from each other to display a 3D image.

In a case in which an image is displayed on the display panel in a time division manner, the optics mechanism may be implemented by active type glasses 2. On the other hand, in a case in which an image is displayed on the display panel in a spatial division manner, the optics mechanism may be implemented by passive type glasses 3.

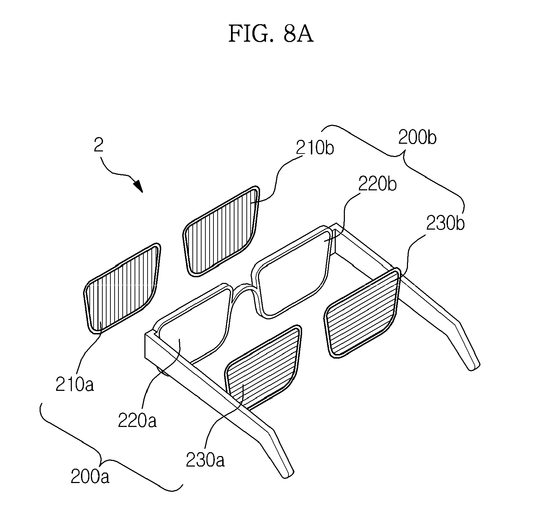

Hereinafter, two examples of the optics mechanism, i.e. the glasses, will be described with reference to FIGS. 8A to 9.

Active type glasses 2 are shown in FIG. 8A. The glasses 2 include a first lens, i.e. a left eye lens 200a, and a second lens, i.e. a right eye lens 200b.

First, a description will be given of the glasses to transmit a 3D image during display of the 3D image through the display panel.

The first lens, i.e. the left eye lens 200a, and the second lens, i.e. the right eye lens 200b, alternately transmit a left eye image and a right eye image on a per-frame basis.

More specifically, the left eye lens 200a is driven on during odd frame times in which the left eye image is displayed on the display module and the right eye lens 200b is driven on during even frame times in which the left eye image is displayed on the display module to form binocular disparity in a time division manner such that a 3D image is realized.

The left eye lens 200a includes a first polarization panel 210a, a shutter panel 220a disposed at the rear of the first polarization panel 210a, and a second polarization panel 230a disposed at the rear of the shutter panel 220a. The right eye lens 200b includes a first polarization panel 210b, a shutter panel 220b disposed at the rear of the first polarization panel 210b, and a second polarization panel 230b disposed at the rear of the shutter panel 220b.

The second polarization panel 230a of the left eye lens and the second polarization panel 230b of the right eye lens are formed of a polarization film having a second polarization direction perpendicular to a first polarization direction of polarized light incident from the display module.

The second polarization direction of the second polarization panel 230a of the left eye lens is perpendicular to the first polarization direction of the first polarization panel 210a and the second polarization direction of the second polarization panel 230b of the right eye lens is perpendicular to the first polarization direction of the first polarization panel 210b.

That is, the first polarization direction of the first polarization panel 210a of the left eye lens and the first polarization panel 210b of the right eye lens is identical to the polarization direction of the polarized light output from the display module. The first polarization panel 210a of the left eye lens and the first polarization panel 210b of the right eye lens may be selectively arranged.

The shutter panel of the left eye lens and the shutter panel of the right eye lens have the same structure. Consequently, the shutter panel of the left eye lens will hereinafter be described by way of example.

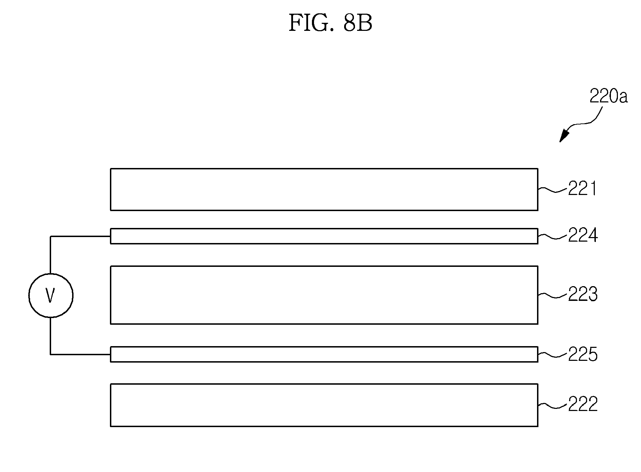

As shown in FIG. 8B, the shutter panel 220a of the left eye lens includes a first substrate 221, a second substrate 222, and a liquid crystal cell 223 disposed between the first substrate and the second substrate. In addition, the shutter panel 220a further includes a first electrode 224 disposed at the first substrate and a second electrode 225 disposed at the second substrate.

In the shutter panel 220a, voltage applied to the first electrode of the first substrate and the second electrode of the second substrate is adjusted to change arrangement of liquid crystal molecules of the liquid crystal cell such that a direction of light incident from the first polarization panel 210a is changed.

That is, during odd frame times in which an image is displayed throughout the display panel 111, the liquid crystal molecules are arranged such that light transmitted through the shutter panel 220a has the second polarization direction. During even frame times in which the next image is displayed throughout the display panel 111, the liquid crystal molecules are arranged such that light transmitted through the shutter panel 220a has the second polarization direction.

To this end, reference voltage is applied to the first electrode 224 of the shutter panel and high or low voltage is applied to the second electrode 225 of the shutter panel.

High voltage is applied to change arrangement of the liquid crystal molecules in the liquid crystal cell to maintain the polarization direction and low voltage is applied to change the polarization direction.

More specifically, when low voltage is applied to the second electrode of the shutter panel 220a, a phase delay of λ/2 is generated with the result that the polarization direction of light incident from the display module is changed. On the other hand, when high voltage is applied to the second electrode of the shutter panel 220a, the polarization direction is maintained. At this time, the polarization direction when high voltage is applied to the second electrode and the polarization direction when low voltage is applied to the second electrode differ by 90 degrees.

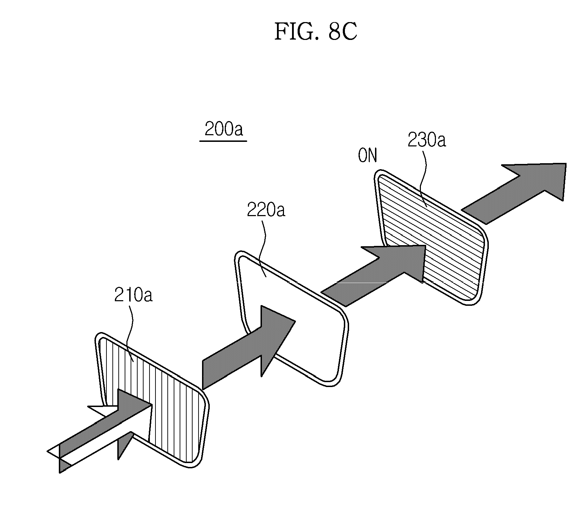

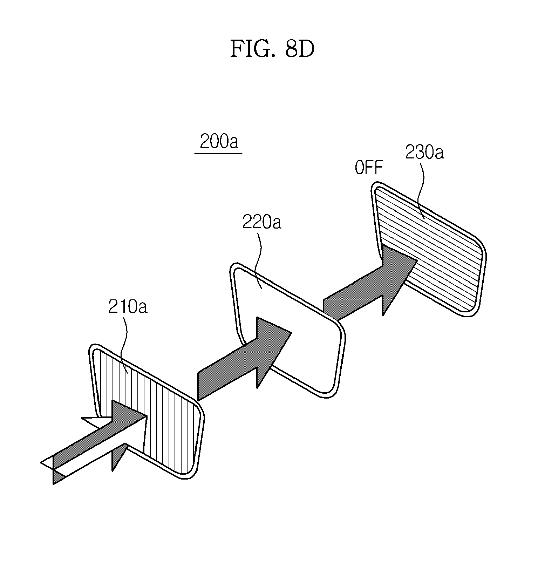

This will be described with reference to FIGS. 8C and 8D. FIG. 8C shows a state in which low voltage is applied to the second electrode of the shutter panel 220a and FIG. 8D shows a state in which high voltage is applied to the second electrode of the shutter panel 220a.

As shown in FIG. 8C, when a polarization component having the first polarization direction output from the display module and a polarization component of external light are incident together, the first polarization panel 210a transmits only the polarization component having the same first polarization direction as the polarization component incident from the display module to the shutter panel 220a.

At this time, the polarization direction of the light transmitted through the first polarization panel 210a is changed at the shutter panel 220a by 90 degrees according to arrangement of the liquid crystal molecules into a polarization component having the second polarization direction and the polarization component having the second polarization direction is transmitted through the second polarization panel. As a result, a user may view an image output from the display module.

As shown in FIG. 8D, when a polarization component having the first polarization direction output from the display module and a polarization component of external light are incident together, the first polarization panel 210a transmits only the polarization component having the same first polarization direction as the polarization component output from the display module to the shutter panel 220a.

At this time, a polarization component having the first polarization direction, of the light transmitted through the first polarization panel 210a, is transmitted through the shutter panel 220a according to arrangement of the liquid crystal molecules and the polarization component having the first polarization direction output from the shutter panel 220a is blocked by the second polarization panel 230. As a result, a user may not view an image output from the display module.

In this way, the left eye lens and the right eye lens are driven on and off at different times.

That is, when low voltage is applied to the second electrode to drive on the left eye lens 200a, high voltage is applied to the second electrode to drive off the right eye lens 200b. On the other hand, when high voltage is applied to the second electrode to drive off the left eye lens 200a, low voltage is applied to the second electrode to drive off the right eye lens 200b.

At this time, the second polarization panel of the left eye lens functions to transmit a left eye image only to a left eye and the second polarization panel of the right eye lens functions to transmit a right eye image only to a right eye.

In addition, predetermined first voltage and second voltage may be applied to the first electrode and the second electrode of the shutter panel 220a, respectively, to generate a potential difference between the first electrode and the second electrode.

Hereinafter, a description will be given of two channel glasses 2 and 2' to transmit two images during display of a multi-view image through the display panel.

The first glasses 2 function to transmit a first image of a first channel and the second glasses 2' function to transmit a second image of a second channel. The left eye lens and the right eye lens of the first glasses are driven on and off at the same time. The left eye lens and the right eye lens of the second glasses are driven on and off at the same time. The first glasses and the second glasses are driven on and off at different times.

That is, when the first glasses 2 are driven on, the second glasses 2' are driven off and, when the first glasses 2 are driven off, the second glasses 2' are driven one. As a result, the first image of the first channel is transmitted through the first glasses 2 and the second image of the second channel is transmitted through the second glasses 2'.

Consequently, different users may view different images through different glasses.

That is, low voltage is applied to the second electrodes of the left and right shutter panels of the first glasses 2 to drive on the two shutter panels. At this time, high voltage is applied to the second electrodes of the two shutter panels of the second glasses 2' to drive off the two shutter panels.

On the other hand, when high voltage is applied to the second electrodes of the two shutter panels of the first glasses 2, low voltage is applied to the second electrodes of the two shutter panels of the second glasses 2' such that the first glasses 2 are driven off and the second glasses 2' are driven on.

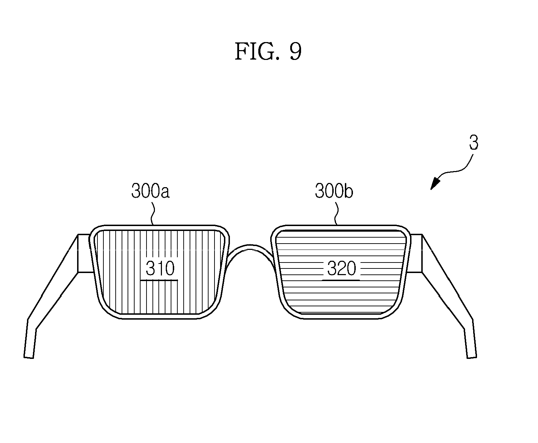

As shown in FIG. 9, glasses 3, as an optics mechanism, include a first lens, i.e. a left eye lens 300a, having a first polarization direction and a second lens, i.e. a right eye lens 300b, having a second polarization direction. The left eye lens 300a transmits a left eye image having a first polarization component and the right eye lens 300b transmits a right eye image having a second polarization component.

The left eye lens 300a includes a first polarization film 310 having a first polarization component and the right eye lens 300b includes a second polarization film 320 having a second polarization component. The polarization direction of the first polarization component and the polarization direction of the second polarization component are perpendicular to each other.

As a result, light transmitted through the first polarization film 310 of the left eye lens is converted into first image light having a first polarization direction of 0 degrees and light transmitted through the second polarization film 320 of the right eye lens is converted into second image light having a second polarization direction of 90 degrees.

Consequently, when the first image light is incident upon a left eye of a user, the first image light may be recognized as a left eye image and, when the second image light is incident upon a right eye of the user, the first image light may be recognized as a right eye image. As a result, the user may view a 3D image.

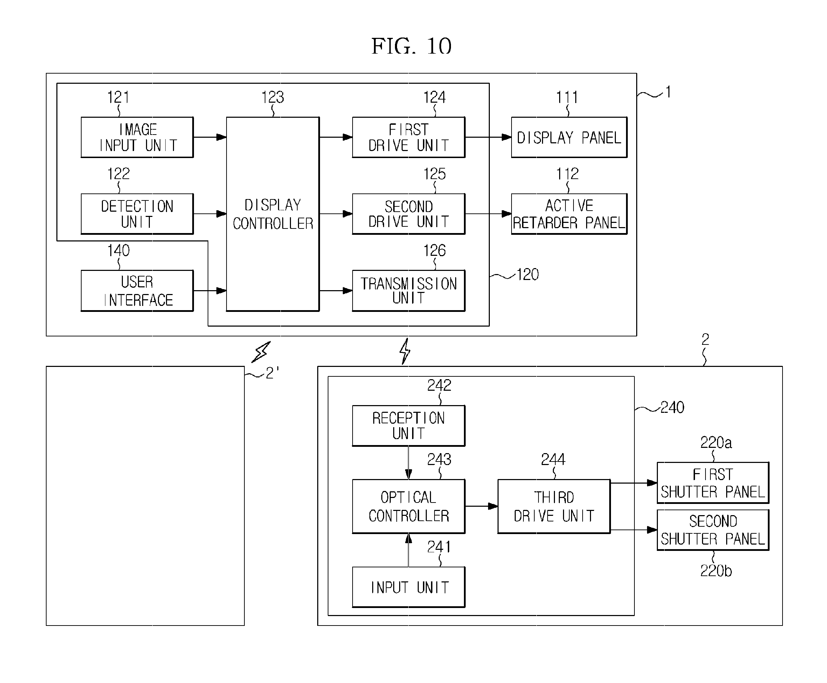

FIG. 10 is a control block diagram of the imaging system according to the embodiment of the present invention. The imaging system includes a display apparatus 1 to display a 3D image in a time division manner and active type glasses 2.

In addition, the imaging system may further include active type glasses 2' to display a multi-view image in a case in which the multi-view image may be displayed through the imaging system.

The display apparatus 1 includes a drive module 120 to drive a display panel 111 and an active retarder panel 112 and a user interface 140 to allow a user to input operation information and to display the operation information of the display apparatus.

The user interface 140 allows input of operation information, such as power on and off commands, an image output mode, and channel and audio information of a broadcast signal, and outputs operation information, such as a current image output mode, power on and off, and channel and audio information.

The image output mode includes one selected from among a 2D image mode, a 3D image mode, and a multi-view image mode.

The user interface 140 includes a touch button or a push button provided at a main body 110. In addition, the user interface 140 may include a remote controller.

On the other hand, the user interface 140 allows input of a screen mode. For example, in a case in which a user reclines while watching the display apparatus 1 in a landscape mode, axes of the left and right eye lenses of the glasses are changed with the result that the user has difficulty in viewing a 3D image or a multi-view image. For this reason, the user may directly change the screen mode of the display module.

The drive module 120 drives the display panel 111 and the active retarder panel 112 based on information received from the user interface 140.

The drive module 120 includes an image input unit 121, a detection unit 122, a display controller 123, a plurality of drive units 124 and 125, and a transmission unit 126.

The image input unit 121 allows input of an image signal from an image source. The image source may include at least one selected from among a TV channel of a broadcast signal, a PC, an optical disc, such as a DVD, and a storage medium, such as a USB drive.

The detection unit 122 detects pivotal rotation of the display module 110. That is, the detection unit 122 detects whether the display module is in a first screen mode, i.e. a landscape mode, or in a second screen mode, i.e. a portrait mode, and transmits a detected signal to the display controller 123.

The display controller 123 controls driving of the display panel 111 such that, when the image output mode input through the user interface 140 is a 2D image mode, an image input through the image input unit 121 is output as a 2D image.

The display controller 123 controls driving of the display panel 111 such that, when the image output mode input through the user interface 140 is a 3D image mode, an image input through the image input unit 121 is output as a 3D image.

The display controller 123 controls driving of the display panel 111 such that, when the image output mode input through the user interface 140 is a multi-view image mode, two images input through the image input unit 121 are output as 2D images.

The display controller 123 determines whether, when the image output mode is the 2D image mode or the multi-view image mode, image information input through the image input unit 121 is 2D image information or 3D image information. Upon determining that the input image information is 2D image information, the display controller 123 controls output of the 2D image information while maintaining the 2D image information. Upon determining that the input image information is 3D image information, the display controller 123 converts the 3D image information into 2D image information and controls output of the converted 2D image information.

The display controller 123 determines whether, when the image output mode is the 3D image mode, image information input through the image input unit 121 is 2D image information or 3D image information. Upon determining that the input image information is 2D image information, the display controller 123 converts the 2D image information into 3D image information and controls output of the converted 3D image information. Upon determining that the input image information is 3D image information, the display controller 123 controls output of the 3D image information while maintaining the 3D image information.

Upon determining that the image output mode is the 3D image mode, the display controller 123 controls transmission of timing information regarding output of a left eye image and a right eye image. Upon determining that the image output mode is the multi-view image mode, the display controller 123 controls transmission of timing information regarding output of a first image of a first channel and a second image of a second channel.

The display controller 123 determines a screen mode of the display module based on a detected signal transmitted from the detection unit 122 and controls driving of the active retarder panel 112 based on the determined screen mode.

The drive units 124 and 125 include a first drive unit 124 to drive the display panel 111 according to a command of the display controller 123 and a second drive unit 125 to drive the active retarder panel 112 according to a command of the display controller 123.

When the screen mode is switched from a first screen mode to a second screen mode, the first drive unit 124 pivots an image displayed through the display panel.

In a 3D image mode, the left eye image and the right eye image are alternately displayed in a time division manner on a per frame basis according to the driving of the first drive unit 124. In a multi-view image mode, the first image of the first channel and the second image of the second channel are alternately displayed in a time division manner on a per frame basis according to the driving of the first drive unit 124. In a 2D image mode, the images are continuously displayed according to the driving of the first drive unit 124.

The first drive unit 124 includes a gate driver to transmit a scan signal to gate lines, a data driver to supply data voltage corresponding to an image signal to data lines, and a backlight driver to adjust voltage supplied to a backlight unit.

The gate driver generates scan signals (i.e. gate driving signals) to drive thin film transistors formed at liquid crystal cells based on a gate control signal of a controller and sequentially supplies the generated scan signals to gate lines of the display panel to drive the transistors.

The data driver converts image data (RGB) supplied from the controller into analog signals (data voltages) and supplies the converted analog data signals to data lines of the display panel in response to a data control signal of the controller.

The backlight driver generates driving power to turn on a light source of the backlight unit. In the 3D image mode or the multi-view image mode, the backlight driver keeps the light source on. In addition, the backlight driver may periodically switch on driving power supplied to the light source such that the backlight unit may be periodically powered on and off.

The second drive unit 125 adjusts voltage applied to the active retarder panel 112 according to a command of the controller.

In a case in which the display module is in the first screen mode, the second drive unit 125 applies high voltage to the active retarder panel such that polarized light output from the display module has a first polarization direction. In a case in which the display module is in the second screen mode, the second drive unit 125 applies low voltage to the active retarder panel to change a polarization direction in the active retarder panel such that polarized light output from the display module has the first polarization direction.

The transmission unit 126 transmits timing information regarding image output to the first glasses 2 and the second glasses 2'. At this time, the transmission unit 126 transmits the timing information to glasses which are powered on. As a result, the transmission unit 126 is synchronized with the glasses.

The transmission unit 126 communicates with the glasses in a wired or wireless fashion.

The timing information includes timing information corresponding to output of the left eye image and the right eye image.

In a case in which the image output mode is a 3D image output mode, the transmission unit 126 transmits timing information regarding output of a left eye image to the left eye lens of the first glasses 2 and timing information regarding output of a right eye image to the right eye lens of the first glasses 2.

In addition, when the second glasses 2' are powered on, the transmission unit 126 transmits timing information regarding output of a left eye image to the left eye lens of the second glasses 2' and timing information regarding output of a right eye image to the right eye lens of the second glasses 2'.

On the other hand, in a case in which the image output mode is a multi-view image output mode, the transmission unit 126 transmits timing information regarding output of a first image of a first channel to the left eye lens and the right eye lens of the first glasses 2 and timing information regarding output of a second image of a second channel to the left eye lens and the right eye lens of the second glasses 2'.

The first glasses 2 and the second glasses 2' are optics mechanisms to transmit and block image light output from the display module 110. The first glasses 2 and the second glasses 2' each further include a drive module 240 to drive a first shutter panel of the left eye lens and a second shutter panel of the right eye lens.

The drive module 240 includes an input unit 241, a reception unit 242, an optical controller 243, and a third drive unit 244. Hereinafter, the drive module of the first glasses 2 will be described by way of example.

The input unit 241 allows input of power on and off commands, an image output mode, such as a 3D image mode or a multi-view image mode, and channel information in the multi-view image mode.

In a 3D image mode, the reception unit 142 receives timing information regarding output of a left eye image and timing information regarding output of a right eye image.

The reception unit 142 receives timing information regarding output of an image of a channel selected through the input unit. For example, in a case in which a first channel is selected, the reception unit 142 receives timing information regarding output of a first image of the first channel. In a case in which a second channel is selected, the reception unit 142 receives timing information regarding output of a second image of the second channel.

In the 3D image mode, the optical controller 243 synchronizes a time when a left eye image and a right eye image are output from the display module with a time when the first shutter panel of the left eye lens and the second shutter panel of the right eye lens are powered on and off.

When the channel selected through the input unit 241 is a first channel in the multi-view image mode, the optical controller 243 synchronizes a time when an image of the first channel is output through the display module with a time when the shutter panels of the left eye lens and the right eye lens are driven on.

That is, the optical controller 243 controls the first shutter panel of the left eye lens and the second shutter panel of the right eye lens to be driven on when the image of the first channel is output through the display module and the first shutter panel of the left eye lens and the second shutter panel of the right eye lens to be driven off when the image of the second channel is output through the display module.

The third drive unit 244 drives on or off the first shutter panel 220a of the left eye lens and the second shutter panel 220b of the right eye lens according to a control command of the optical controller 243.

When the first shutter panel 220a of the left eye lens is driven on, the third drive unit 244 adjusts voltage applied to the second electrode of the first shutter panel 220a to a low level. When the first shutter panel 220a is driven off, the third drive unit 244 adjusts voltage applied to the second electrode of the first shutter panel 220a to a high level. When the second shutter panel 220b of the right eye lens is driven on, the third drive unit 244 adjusts voltage applied to the second electrode of the second shutter panel 220b to a low level. When the second shutter panel 220b is driven off, the third drive unit 244 adjusts voltage applied to the second electrode of the second shutter panel 220b to a high level.

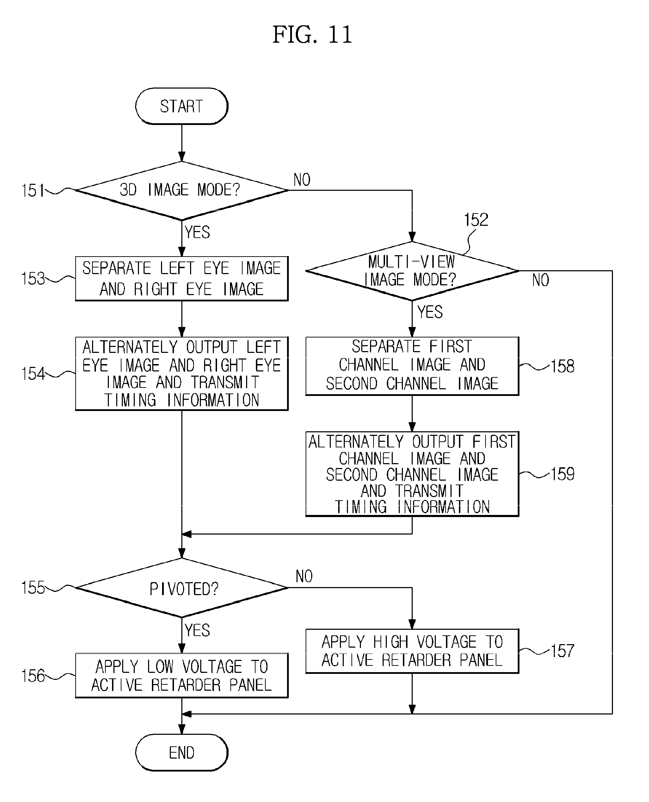

FIG. 11 is a control flowchart of the imaging system according to the embodiment of the present invention.

When the display apparatus of the imaging system is powered on and an image is input through the image input unit, the display apparatus determines whether the image information input through the image input unit is 2D image information or 3D image information.

In addition, the display apparatus determines an image output mode to output an image input through the user interface 140.

The display apparatus determines whether the determined image output mode is a 3D image mode (151). Upon determining that the determined image output mode is not a 3D image mode, the display apparatus determines whether the determined image output mode is a multi-view image mode (152).

When the image output mode is a 3D image mode and the image information input through the image input unit 121 is 2D image information, the display apparatus converts the input 2D image information into 3D image information and separates a left eye image and a right eye image from each other based on the converted 3D image information (153). In addition, when the input image information is 3D image information, the display apparatus separates a left eye image and a right eye image from each other based on the 3D image information.

Subsequently, the display apparatus alternately outputs the separated left eye image and right eye image through the display panel. At this time, the display apparatus transmits first timing information regarding output of the left eye image and second timing information regarding output of the right eye image to the optics mechanism, i.e. the glasses (154).

Subsequently, the display apparatus determines whether the display apparatus is in a first screen mode or a second screen mode based on a detected signal of the detection unit before output of the 3D image or during output of the 3D image. That is, the display apparatus determines whether the display apparatus has been pivoted (155).

Upon determining that the display apparatus has been rotated from the first screen mode to the second screen mode, i.e. the display apparatus has been pivoted from a landscape mode to a portrait mode, the display apparatus applies low voltage to the active retarder panel (156) to change arrangement of the liquid crystal molecules of the liquid crystal cell of the active retarder panel such that a polarization direction is changed from a horizontal direction to a vertical direction.

As a result, the polarization direction of image light output through the display apparatus after pivotal rotation becomes equal to that of the image light before pivotal rotation.

On the other hand, in a case in which the display apparatus is maintained in the first screen mode, the display apparatus applies high voltage to the active retarder panel (157) to maintain arrangement of the liquid crystal molecules of the liquid crystal cell of the active retarder panel such that the polarization direction is maintained in the vertical direction.

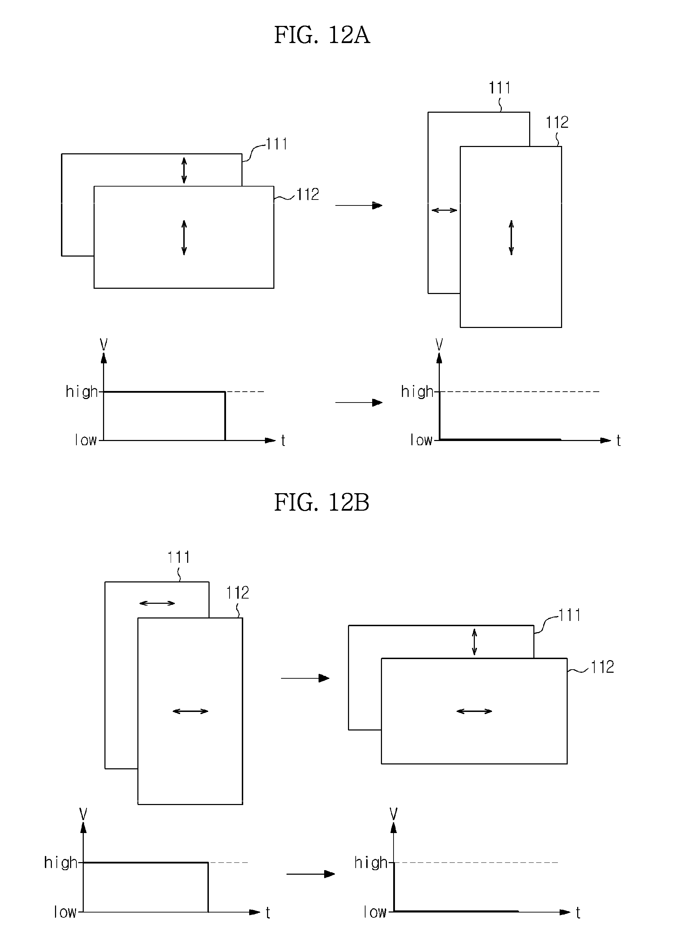

This will be described with reference to FIGS. 12A and 12B.

When the display module is in the first screen mode, i.e. the landscape mode, as shown in FIG. 12A, the polarization direction of image light output from the display panel 111 is a vertical direction. At this time, high voltage is applied to the active retarder panel 112. Consequently, arrangement of the liquid crystal molecules of the liquid crystal cell is changed with the result that the image light output from the display panel 111 is output through the active retarder panel 112 in a state in which the polarization direction of the image light is maintained.

When the display module is pivoted to the second screen mode, i.e. the portrait mode, the polarization direction of image light output from the display panel 111 becomes a horizontal direction. At this time, low voltage is applied to the active retarder panel 112. Consequently, arrangement of the liquid crystal molecules of the liquid crystal cell is changed with the result that the horizontal image light output from the display panel 111 is rotated in the liquid crystal cell of the active retarder panel 112 and is output as vertical image light.

As shown in FIG. 12B, it is assumed that the first screen mode of the display module is a portrait mode and the polarization direction of image light output from the display panel 111 is a horizontal direction.

At this time, high voltage is applied to the active retarder panel 112. Consequently, the active retarder panel 112 outputs the image light output from the display panel 111 in a state in which the polarization direction of the image light is maintained.

When the display module is pivoted to the second screen mode, i.e. the landscape mode, the polarization direction of image light output from the display panel 111 becomes a vertical direction.

At this time, low voltage is applied to the active retarder panel 112. Consequently, arrangement of the liquid crystal molecules in the liquid crystal cell of the active retarder panel is changed with the result that the vertical image light output from the display panel 111 is rotated in the liquid crystal cell of the active retarder panel 112 and is output as horizontal image light.

When the image output mode input through the user interface 140 is a multi-view image mode, the display apparatus confirms a plurality of channels selected by a user and separates images of the confirmed first and second channels from each other (158), alternately outputs the separated images of the first and second channels through the display panel, and transmits first timing information regarding output of the image of the first channel and second timing information regarding output of the image of the second channel to the first glasses and the second glasses (159).

At this time, in the multi-view image mode, the first glasses 2 synchronizes a time when a first image of the first channel is output through the display apparatus with a time when the first shutter panel of the left eye lens and the second shutter panel of the right eye lens are powered on and the second glasses 2' synchronizes a time when a second image of the second channel is output through the display apparatus with a time when the first shutter panel of the left eye lens and the second shutter panel of the right eye lens are powered on.

In addition, in the multi-view image mode, the display apparatus determines whether image information of the plural channels input through the image input unit 121 is 2D image information or 3D image information. Upon determining that the input image information is 2D image information, the display apparatus controls output of the 2D image information in a state in which the 2D image information is maintained. Upon determining that the input image information is 3D image information, the display apparatus converts the 3D image information into 2D image information and outputs the converted 2D image information.

Even in the multi-view image mode, the display apparatus determines a screen mode and adjusts voltage applied to the active retarder panel based on the determined screen mode (155 to 157).

When the image output mode is a 2D image mode, the display apparatus determines whether image information input through the image input unit 121 is 2D image information or 3D image information. Upon determining that the input image information is 2D image information, the display apparatus outputs the 2D image information in a state in which the 2D image information is maintained. Upon determining that the input image information is 3D image information, the display apparatus converts the 3D image information into 2D image information and outputs the converted 2D image information.

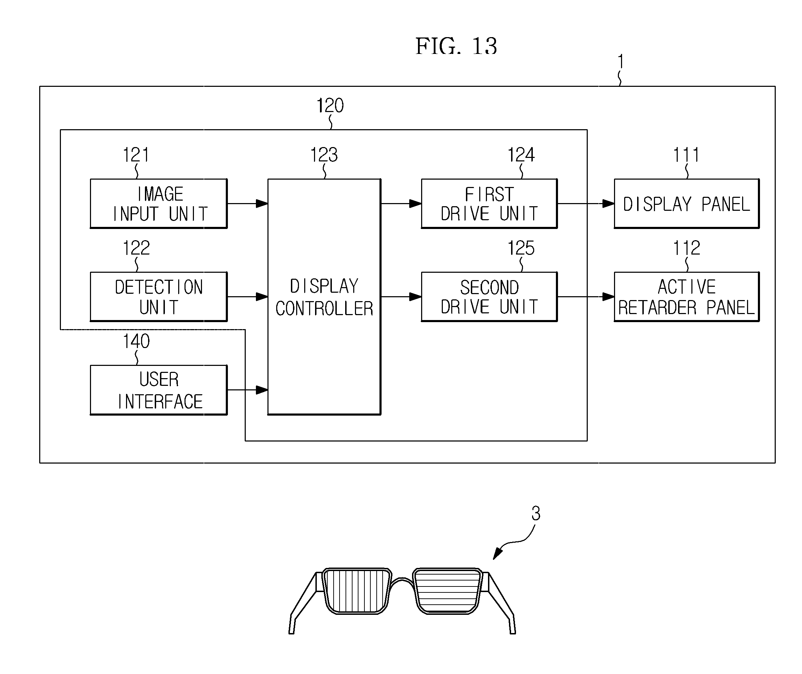

FIG. 13 is a control block diagram of an imaging system including a display apparatus 1 to display a 3D image in a spatial division manner and passive type glasses 3.

The display apparatus 1 includes a drive module 120 to drive a display panel 111 and an active retarder panel 112 and a user interface 140 to allow a user to input operation information and to display the operation information of the display apparatus.

The user interface 140 allows input of operation information, such as power on and off commands, an image output mode, and channel and audio information of a broadcast signal, and outputs operation information, such as a current image output mode, power on and off, and channel and audio information.

The image output mode includes one selected from between a 2D image mode and a 3D image mode.

The drive module 120 drives the display panel 111 and the active retarder panel 112 based on information received from the user interface 140.

The drive module 120 includes an image input unit 121, a detection unit 122, a display controller 123, and a plurality of drive units 124 and 125. The image input unit 121 and the detection unit 122 are identical to those of FIG. 10 and thus a description thereof will be omitted.

The display controller 123 controls driving of the display panel 111 such that, when the image output mode input through the user interface 140 is a 2D image mode, an image input through the image input unit 121 is output as a 2D image.

The display controller 123 controls driving of the display panel 111 such that, when the image output mode input through the user interface 140 is a 3D image mode, an image input through the image input unit 121 is output as a 3D image.

The display controller 123 divides image data into odd left eye image data to be applied to odd horizontal lines of a pixel array and even left eye image data to be applied to even horizontal lines of the pixel array and arranges a left eye image and a right eye image per horizontal line of one frame.

At this time, the display controller 123 controls driving of the active retarder panel such that polarization components having different polarization directions are provided to the odd horizontal lines and the even horizontal lines. The odd horizontal lines and the even horizontal lines correspond to left and right image data lines.

The display controller 123 determines a screen mode of the display module based on a detected signal transmitted from the detection unit 122 and controls driving of the active retarder panel 112 based on the determined screen mode.

When the screen mode is switched from a first screen mode to a second screen mode, the display controller 123 controls pivotal rotation of a screen output through the display panel. That is, the display panel 111 displays an image in a first display mode before pivotal rotation and, when the screen mode is switched to the second screen mode, pivots the image such that the image is displayed in a second display mode.

At this time, left and right image data are arranged per vertical line of the display panel.

In addition, the display controller 123 provides polarization components having different polarization directions per vertical line of the active retarder panel.

That is, when the screen mode is switched from the first screen mode to the second screen mode, spatial division arrangement of the image data and polarization components are changed from the horizontal lines to the vertical lines at the display panel side and the active retarder panel side but spatial division arrangement of the image data and polarization components are equally recognized as the horizontal lines at the user side.

The drive units 124 and 125 include a first drive unit 124 to drive the display panel 111 according to a command of the display controller 123 and a second drive unit 125 to drive the active retarder panel 112 according to a command of the display controller 123.

When the screen mode is switched from the first screen mode to the second screen mode, the first drive unit 124 drives the display panel 111 to pivot an image.

In a 3D image mode, the first drive unit 124 displays divided left eye image and right eye image in one frame.

The second drive unit 125 adjusts voltage applied to the active retarder panel 112 per line of the pixel array of the active retarder panel 112 such that polarization components having different polarization directions are provided per line of the pixel array of the active retarder panel 112 according to a command of the controller.

In a case in which the display module is in the first screen mode, the second drive unit 125 applies high voltage to odd horizontal lines of the pixel array of the active retarder panel such that polarized light output from the display module has a first polarization direction. In addition, the second drive unit 125 applies low voltage to even horizontal lines of the pixel array of the active retarder panel such that polarized light output from the display module has a second polarization direction.

In a case in which the display module is in the second screen mode, the second drive unit 125 applies high voltage to odd vertical lines of the pixel array of the active retarder panel such that polarized light output from the display module has a first polarization direction. In addition, the second drive unit 125 applies low voltage to even vertical lines of the pixel array of the active retarder panel such that polarized light output from the display module has a second polarization direction.

As a result, the user may recognize that the final polarization direction of the display module after pivotal rotation is equal to that of the display module before pivotal rotation.

The glasses 3 include a left eye lens and a right eye lens to which polarization components having different directions are provided.

Consequently, the glasses transmit only polarization components having the same polarization direction as image light output from the display module 110.

For example, in a case in which the left eye lens has a polarization film having a vertical polarization component and the right eye lens has a polarization film having a horizontal polarization component, the left eye lens transmits only a vertical polarization component of image light output from the display module and the right eye lens transmits only a horizontal polarization component of the image light output from the display module.

Operation of the display apparatus will be briefly described. When the image output mode is a 3D image mode, the display apparatus determines whether the screen mode is a first screen mode or a second screen mode.

Upon determining that the current screen mode is the first screen mode, the display apparatus divides input image data into left eye image data and right eye image data and arranges the left eye image data on odd horizontal lines and the left eye image data on even horizontal lines.

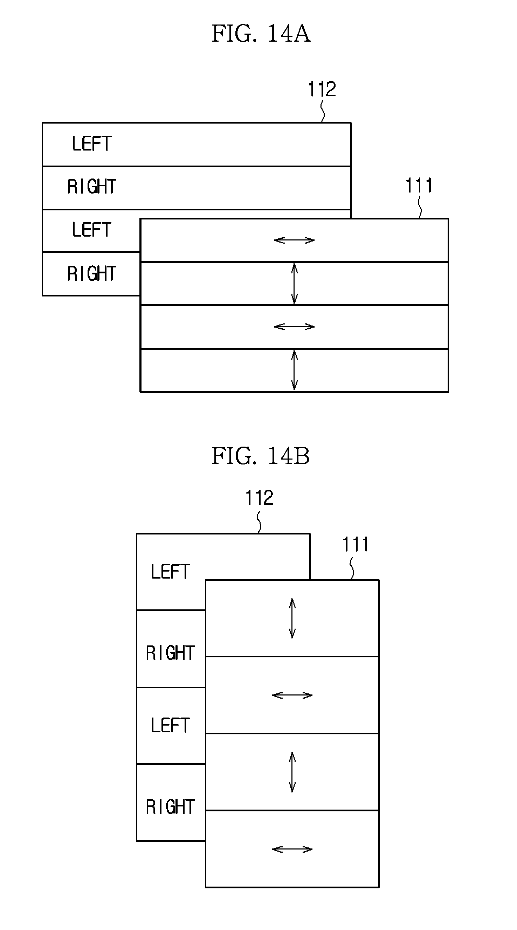

As shown in FIG. 14A, the display apparatus inputs the left eye image data to odd horizontal lines of the pixel array of the display panel and the right eye image data to even horizontal lines of the pixel array of the display panel.

Subsequently, the display apparatus applies high voltage to second electrodes of odd horizontal lines of the active retarder panel to provide a polarization component having a first polarization direction to the odd horizontal lines. In addition, the display apparatus applies low voltage to second electrodes of even horizontal lines of the active retarder panel to provide a polarization component having a second polarization direction to the even horizontal lines.

As a result, a left eye image having the first polarization direction is displayed on odd horizontal lines of the display module and a right eye image having the second polarization direction is displayed on even horizontal lines of the display module.

Upon determining that the current screen mode is the second screen mode, the display apparatus divides input image data into left eye image data and right eye image data and arranges the left eye image data on odd vertical lines and the left eye image data on even vertical lines.

As shown in FIG. 14B, the display apparatus inputs the left eye image data to odd vertical lines of the pixel array of the display panel and the right eye image data to even vertical lines of the pixel array of the display panel.

Subsequently, the display apparatus applies high voltage to second electrodes of odd vertical lines of the active retarder panel and low voltage to second electrodes of even vertical lines of the active retarder panel

As a result, a left eye image having a first polarization direction is displayed on odd vertical 1 lines of the display module and a right eye image having a second polarization direction is displayed on even vertical lines of the display module.

At this time, the display apparatus displays the left eye image having the first polarization direction per vertical line and the right eye image having the second polarization direction on the even vertical lines in a state in which the display module is rotated by 90 degrees. Consequently, the user may view the left eye image having the first polarization direction per horizontal line and the right eye image having the second polarization direction on the even vertical lines.

As a result, the left eye image is transmitted through the left eye lens having the polarization component of the first polarization direction and the right eye image is transmitted through the right eye lens having the polarization component of the second polarization direction.

Consequently, the user may view a 3D image irrespective of whether the display apparatus is pivoted.

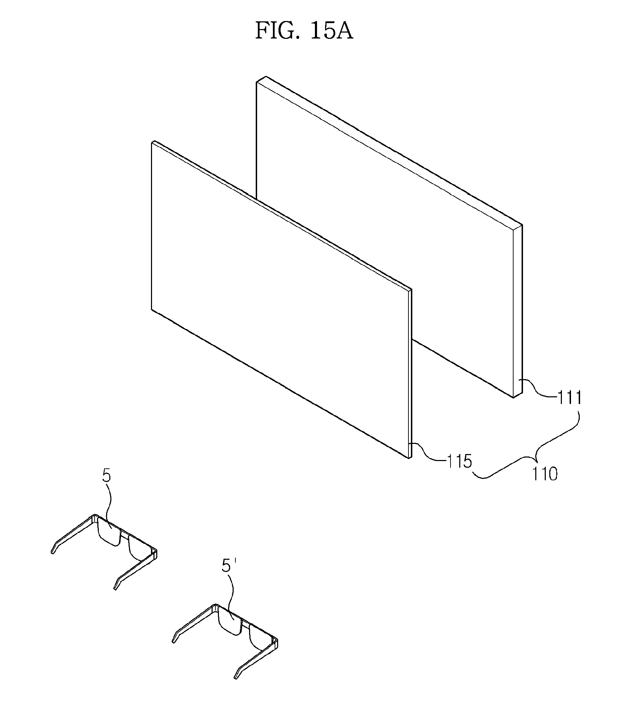

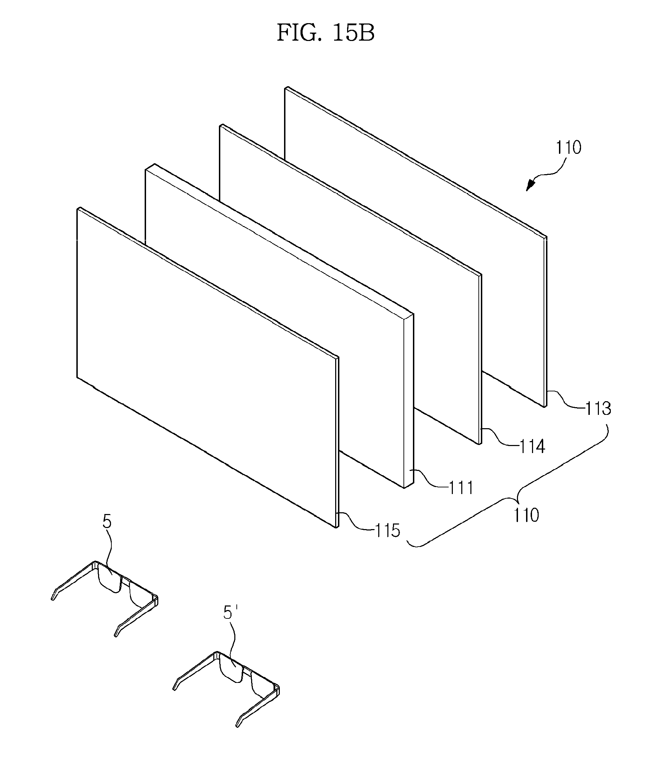

FIGS. 15A and 15B are views illustrating an imaging system according to a further embodiment of the present invention. The imaging system includes a display apparatus 4 to display a 3D image using a polarization panel 115 instead of an active retarder panel and active type glasses 5 as an optics mechanism.

In a case in which a multi-view image may be displayed, the imaging system further includes active type glasses 5 and 5' capable of selecting channels.

Hereinafter, a case in which both a 3D image and a multi-view image may be displayed will be described by way of example.

As shown in FIG. 15A, the display apparatus 4 includes a display panel 111 and a polarization panel 115.

The polarization panel 115 includes a polarization film having a polarization component of one direction. The polarization panel 115 outputs image light output from the display panel 111 as polarized light having one direction, i.e. a first polarization direction.

In a case in which the display panel is an LCD panel as shown in FIG. 15B, the display module 110 may further include a backlight unit 113 to supply light to the display panel 111 and a polarization panel 114 disposed between the backlight unit 113 and the display panel 111 to guide non-polarized light supplied from the backlight unit 113 to the display panel 111 in a first polarization direction or a second polarization direction.

The display module is identical to that of the previous embodiment and thus a description thereof will be omitted.

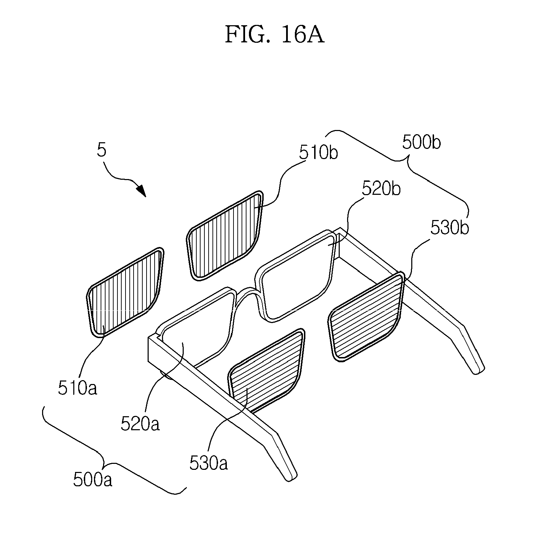

FIGS. 16A to 16C are views illustrating the optics mechanism 5 provided at the imaging system according to the embodiment of the present invention.

As shown in FIG. 16A, the optics mechanism 5, i.e. the glasses, includes a first lens, i.e. a left eye lens 500a, and a second lens, i.e. a right eye lens 500b.

The left eye lens 500a includes an active retarder panel 510a, a shutter panel 520a disposed at the rear of the active retarder panel 510a, and a polarization panel 530a disposed at the rear of the shutter panel 520a. The right eye lens 500b includes an active retarder panel 510b, a shutter panel 520b disposed at the rear of the active retarder panel 510b, and a polarization panel 530b disposed at the rear of the shutter panel 520b.

The active retarder panels 510a and 510b function to output image light output from the display panel in at least one polarization direction. The active retarder panels 510a and 510b have the same structure as the active retarder panel of FIG. 5 and thus will be briefly described.

The polarization direction of image light incident upon the active retarder panels 510a and 510b is changed according to pivotal rotation of the display panel 111.

More specifically, the polarization direction of the image light output from the display panel 111 is changed depending upon whether the display panel 111 is driven in a landscape mode or a portrait mode. As a result, the polarization direction of the image light incident upon the active retarder panels 510a and 510b of the left and right eye lenses is changed.

Consequently, voltage applied to a first electrode unit and a second electrode unit of the active retarder panels 510a and 510b is adjusted to change arrangement of liquid crystal molecules in a liquid crystal cell such that the polarization direction of the image light to be transmitted is changed.

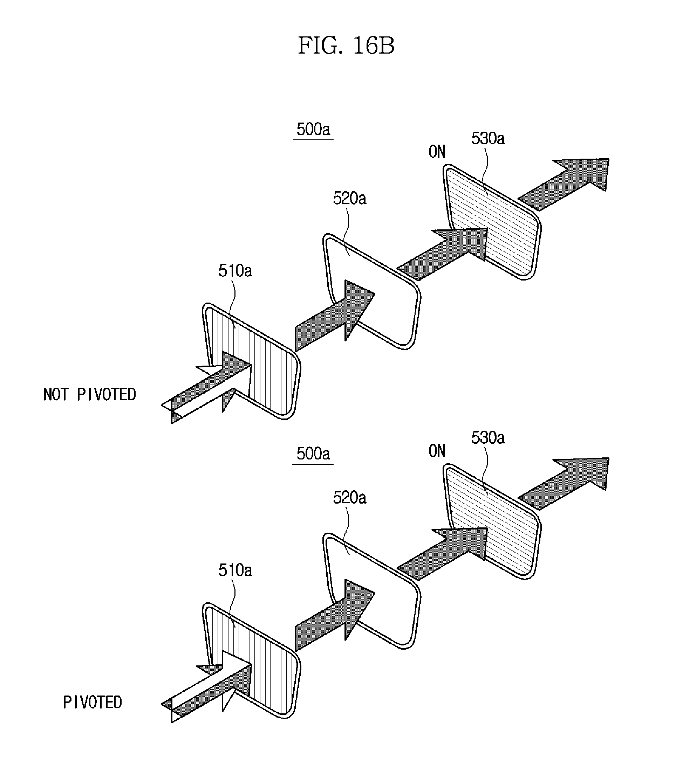

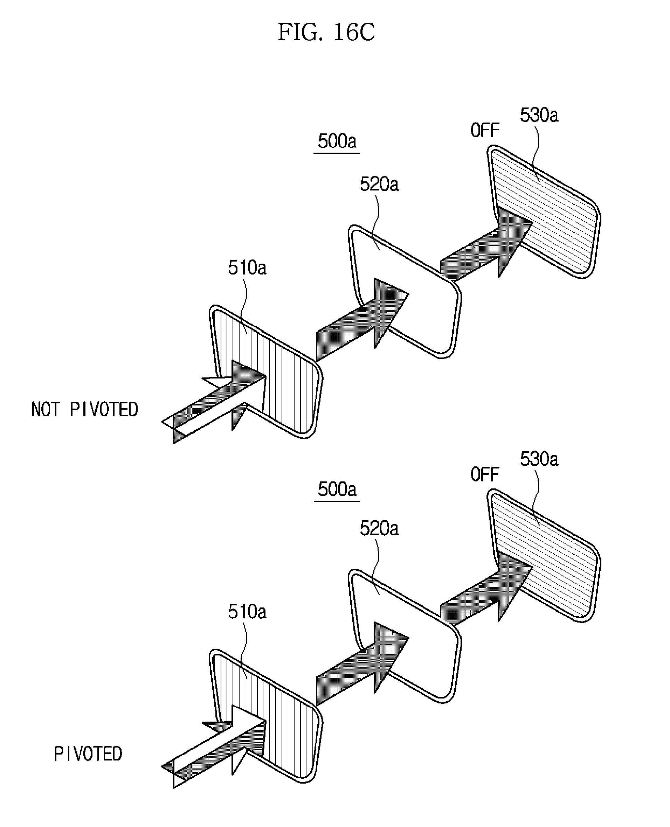

That is, the active retarder panels 510a and 510b adjust voltage applied to the first electrode unit and the second electrode unit depending upon whether the display panel 111 has been pivoted to change arrangement of the liquid crystal molecules in the liquid crystal cell such that the polarization direction of the image light to be transmitted is changed, which will be described with reference to FIGS. 16B and 16C.

In a case in which the display panel is not pivoted, i.e. in a landscape mode, as shown in FIGS. 16B and 16C, reference voltage is applied to the first electrode unit formed at a first substrate of the active retarder panel 510a of the left eye lens and high voltage is applied to the second electrode unit formed at a second substrate of the active retarder panel 510a of the left eye lens such that the image light incident upon the active retarder panel 510a of the left eye lens is transmitted in a state in which the polarization direction of the image light is unchanged.

On the other hand, in a case in which the display panel is pivoted, i.e. in a portrait mode, image light is incident upon the active retarder panel in a state in which the polarization direction of the image light is changed by 90 degrees. At this time, reference voltage is applied to the first electrode unit formed at the first substrate of the active retarder panel 510a of the left eye lens and low voltage is applied to the second electrode unit formed at the second substrate of the active retarder panel 510a of the left eye lens such that the image light incident upon the active retarder panel 510a of the left eye lens is transmitted in a state in which the polarization direction of the image light is changed by 90 degrees.

That is, a phase delay difference of λ/2 is present between the polarization direction when high voltage is applied to the active retarder panel and the polarization direction when low voltage is applied to the active retarder panel.

In this way, arrangement of the liquid crystal molecules is changed using a potential difference between the two substrates of the active retarder panel 112 to maintain polarized light output through the display module in a predetermined polarization direction. As a result, a 3D or multi-view image output from the display module 110 may be displayed in both the landscape mode and the portrait mode.

In addition, the polarization direction of the image light transmitted through the active retarder panels 510a and 510b of the left eye lens and the right eye lens is perpendicular to the polarization direction of the polarization panels 530a and 53ob.

More specifically, the active retarder panel 510a of the left eye lens adjusts the polarization direction of the image light output from the display panel and transmits the image light having the adjusted polarization direction. At this time, the active retarder panel 510a adjusts the polarization direction of the image light output from the display panel such that the polarization direction of the image light is perpendicular to the polarization direction of the polarization panel 530a.

In the same manner, the active retarder panel 510b of the right eye lens adjusts the polarization direction of the image light output from the display panel and transmits the image light having the adjusted polarization direction. At this time, the active retarder panel 510b adjusts the polarization direction of the image light output from the display panel such that the polarization direction of the image light is perpendicular to the polarization direction of the polarization panel 530b.

That is, the polarization direction of the image light transmitted through the active retarder panel 510a of the left eye lens is perpendicular to the polarization direction of the polarization panel 530a and the polarization direction of the image light transmitted through the active retarder panel 510b of the right eye lens is perpendicular to the polarization direction of the polarization panel 530b.

The polarization panels 530a and 530b of the left and right eye lenses transmit the image light to eyes of the user or block the image light.

The shutter panels 520a and 520b of the left and right eye lenses are driven on at different times or at the same time depending upon whether the image output from the display panel is a 3D image or a multi-view image.

Hereinafter, a description will be given of the shutter panels of the glasses to transmit a 3D image during display of the 3D image through the display panel.

The shutter panel 520a of the first lens, i.e. the left eye lens 500a, and the shutter panel 520b of the second lens, i.e. the right eye lens 500b, alternately transmit left eye image light and right eye image light on a per-frame basis.

More specifically, only the shutter panel 520a of the left eye lens 500a is driven on during odd frame times in which the left eye image is displayed on the display module and only the shutter panel 520b of the right eye lens 500b is driven on during even frame times in which the left eye image is displayed on the display module to form binocular disparity in a time division manner such that a 3D image is realized.

The shutter panel of the left eye lens has the same structure as the shutter panel of the right eye lens. In addition, the shutter panels of the left eye lens and the right eye lens have the same structure as in FIG. 8B.

The shutter panels 520a and 520b of the left eye lens and the right eye lens adjust voltage applied to the first electrode of the first substrate and the second electrode of the second substrate to change arrangement of the liquid crystal molecules of the liquid crystal cell such that the polarization direction of the light incident upon the active retarder panels 510a and 510b is changed.

That is, when the left eye lens and the right eye lens are driven on, reference voltage is applied to the first electrodes of the shutter panels and high or low voltage is applied to the second electrodes of the shutter panels.

High voltage is applied to change arrangement of the liquid crystal molecules in the liquid crystal cell to maintain the polarization direction and low voltage is applied to the change the polarization direction.

For example, in a case in which a 3D image is displayed, the liquid crystal molecules are arranged such that light transmitted through the shutter panel 520a has the second polarization direction during odd frame times in which an image is displayed throughout the display panel 111 and the liquid crystal molecules are arranged such that light transmitted through the shutter panel 520b has the second polarization direction during even frame times in which the next image is displayed throughout the display panel 111.

On and off driving of the shutter panel of the left eye lens will be described with reference to FIGS. 16B and 16C.

FIG. 16B is a view illustrating a state in which the left eye lens is driven on.

When image light output from the display module and external light are incident upon the active retarder panel 510a in a state in which the display panel is not pivoted, the active retarder panel 510a adjusts a polarization direction of the image light to a predetermined direction and then transmits the image light to the shutter panel 520a.

When the image light transmitted through the active retarder panel 510a is incident upon the shutter panel 520a, the shutter panel 520a rotates the polarization direction of the incident image light by 90 degrees and transmits the image light. At this time, low voltage is applied to the second electrode of the shutter panel 520a of the left eye lens.

Subsequently, the image light transmitted through the shutter panel 520a is incident upon the polarization panel 530a. The polarization panel 530a transmits the image light to the left eye of the user. At this time, the polarization direction of the image light transmitted through the shutter panel 520a is identical to that of the polarization panel 530a.

As a result, the user may view the image output from the display module.

When image light output from the display module and external light are incident upon the active retarder panel 510a in a state in which the display panel is pivoted, the active retarder panel 510a adjusts a polarization direction of the image light to a predetermined direction and then transmits the image light to the shutter panel 520a.

When the image light transmitted through the active retarder panel 510a is incident upon the shutter panel 520a, the shutter panel 520a rotates the polarization direction of the incident image light by 90 degrees and transmits the image light. At this time, low voltage is applied to the second electrode of the shutter panel 520a of the left eye lens.

Subsequently, the image light transmitted through the shutter panel 520a is incident upon the polarization panel 530a. The polarization panel 530a transmits the image light to the left eye of the user. At this time, the polarization direction of the image light transmitted through the shutter panel 520a is identical to that of the polarization panel 530a.

As a result, the user may view the image output from the display module.

FIG. 16C is a view illustrating a state in which the left eye lens is driven off.

When image light output from the display module and external light are incident upon the active retarder panel 510a in a state in which the display panel is not pivoted, the active retarder panel 510a adjusts a polarization direction of the image light to a predetermined direction and then transmits the image light to the shutter panel 520a.

When the image light transmitted through the active retarder panel 510a is incident upon the shutter panel 520a, the shutter panel 520a transmits the incident image light while maintaining the polarization direction of the image light. At this time, high voltage is applied to the second electrode of the shutter panel 520a of the left eye lens.

Subsequently, the image light transmitted through the shutter panel 520a is incident upon the polarization panel 530a. The polarization panel 530a blocks the incident image light. At this time, the polarization direction of the image light transmitted through the shutter panel 520a is perpendicular to that of the polarization panel 530a.

As a result, the user may not view the image output from the display module.

When image light output from the display module and external light are incident upon the active retarder panel 510a in a state in which the display panel is pivoted, the active retarder panel 510a adjusts a polarization direction of the image light to a predetermined direction and then transmits the image light to the shutter panel 520a.

When the image light transmitted through the active retarder panel 510a is incident upon the shutter panel 520a, the shutter panel 520a transmits the incident image light while maintaining the polarization direction of the image light. At this time, high voltage is applied to the second electrode of the shutter panel 520a of the left eye lens.

Subsequently, the image light transmitted through the shutter panel 520a is incident upon the polarization panel 530a. The polarization panel 530a blocks the incident image light. At this time, the polarization direction of the image light transmitted through the shutter panel 520a is perpendicular to that of the polarization panel 530a.

As a result, the user may not view the image output from the display module.

More specifically, when low voltage is applied to the second electrodes of the shutter panels 520a and 520b of the left and right eye lenses, a phase delay of λ/2 is generated with the result that the polarization direction of the light transmitted through the shutter panel 520a is changed. On the other hand, when high voltage is applied to the second electrodes of the shutter panels 520a and 520b of the left and right eye lenses, the polarization direction of the light transmitted through the shutter panel 520a is maintained.

During display of a 3D image, the left eye lens and the right eye lens are driven on at different times using the above principle. On the other hand, during display of a multi-view image, the left eye lens and the right eye lens are driven on at the same time using the above principle.

For example, when low voltage is applied to the second electrode of the left eye lens 500a to drive on the left eye lens 500a during display of a 3D image, high voltage is applied to the second electrode of the right eye lens 500b to drive off the right eye lens 500b. On the other hand, when high voltage is applied to the second electrode of the left eye lens 500a to drive off the left eye lens 500a, low voltage is applied to the second electrode of the right eye lens 500b to drive on the right eye lens 500b.

At this time, the polarization panel 530a of the left eye lens of the glasses functions to transmit the left eye image to the left eye of the user and the polarization panel 530b of the right eye lens of the glasses functions to transmit the right eye image to the right eye of the user.

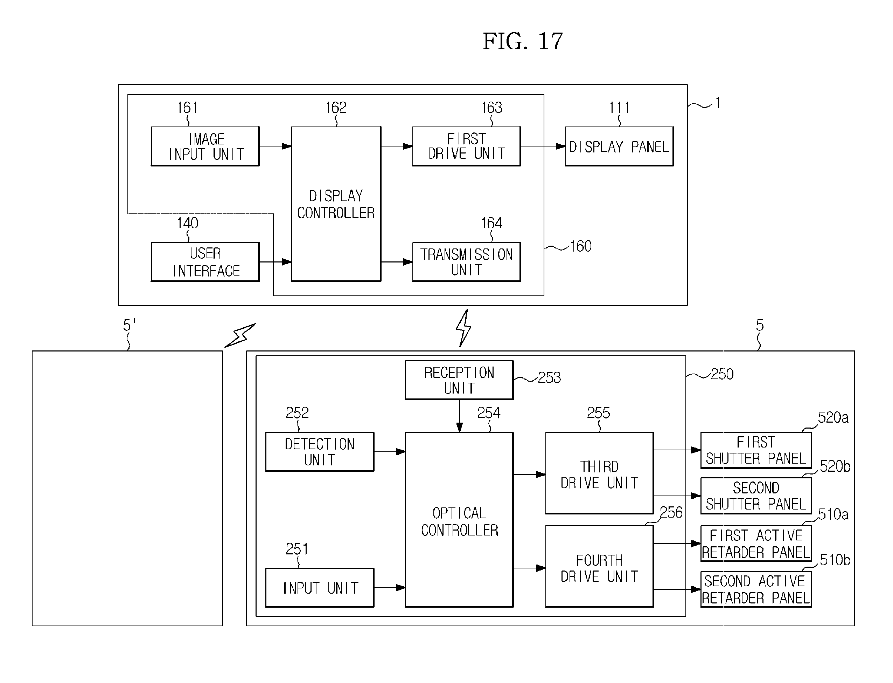

FIG. 17 is a control block diagram of the imaging system according to the embodiment of the present invention. The imaging system includes a display apparatus 4 to display a 3D image or a multi-view image in a time division manner and active type glasses 5 and 5'.

The display apparatus 4 includes a drive module 160 to drive a display panel 111 and a user interface 140 to allow a user to input operation information and to display the operation information of the display apparatus.

The user interface 140 allows input of operation information, such as power on and off commands, an image output mode, a screen mode, and channel and audio information of a broadcast signal, and outputs operation information, such as a current image output mode, power on and off, and channel and audio information.

The image output mode includes one selected from among a 2D image mode, a 3D image mode, and a multi-view image mode. The user interface 140 includes a touch button or a push button provided at a main body 110. In addition, the user interface 140 may include a remote controller.

The drive module 160 drives the display panel 111 based on information received from the user interface 140. The drive module 160 includes an image input unit 161, a display controller 162, a drive unit 163, and a transmission unit 164.

The image input unit 161 allows input of an image signal from an image source. The image source includes at least one selected from among a TV channel of a broadcast signal, a PC, an optical disc, such as a DVD, and a storage medium, such as a USB drive.

The display controller 162 controls driving of the display panel 111 such that, when the image output mode input through the user interface 140 is a 2D image mode, an image input through the image input unit 161 is output as a 2D image.

The display controller 162 controls driving of the display panel 111 such that, when the image output mode input through the user interface 140 is a 3D image mode, an image input through the image input unit 161 is output as a 3D image.

The display controller 162 controls driving of the display panel 111 such that, when the image output mode input through the user interface 140 is a multi-view image mode, two images input through the image input unit 161 are output as 2D images.

The display controller 162 determines whether, when the image output mode is the 2D image mode or the multi-view image mode, image information input through the image input unit 161 is 2D image information or 3D image information. Upon determining that the input image information is 2D image information, the display controller 162 controls output of the 2D image information while maintaining the 2D image information. Upon determining that the input image information is 3D image information, the display controller 162 converts the 3D image information into 2D image information and controls output of the converted 2D image information.

The display controller 162 determines whether, when the image output mode is the 3D image mode, image information input through the image input unit 161 is 2D image information or 3D image information. Upon determining that the input image information is 2D image information, the display controller 162 converts the 2D image information into 3D image information and controls output of the converted 3D image information. Upon determining that the input image information is 3D image information, the display controller 162 controls output of the 3D image information while maintaining the 3D image information.

Upon determining that the image output mode is the 3D image mode, the display controller 162 controls transmission of timing information regarding output of a left eye image and a right eye image. Upon determining that the image output mode is the multi-view image mode, the display controller 162 controls transmission of timing information regarding output of a first image of a first channel and a second image of a second channel.

When a second screen mode is input through the user interface, the display controller 162 controls pivotal rotation of an image display through the display panel such that the screen mode is switched from a first screen mode to the second screen mode

The first drive unit 163 drives the display panel 111 according to a command of the display controller 162.

When the screen mode is switched from the first screen mode to the second screen mode, the first drive unit 163 pivots the image displayed through the display panel.

In a 3D image mode, the left eye image and the right eye image are alternately displayed in a time division manner on a per frame basis according to the driving of the first drive unit 163. In a multi-view image mode, the first image of the first channel and the second image of the second channel are alternately displayed in a time division manner on a per frame basis according to the driving of the first drive unit 163. In a 2D image mode, the images are continuously displayed according to the driving of the first drive unit 163.

The first drive unit 163 includes a gate driver to transmit a scan signal to gate lines, a data driver to supply data voltage corresponding to an image signal to data lines, and a backlight driver to adjust voltage supplied to a backlight unit, which are identical to those of the previous embodiment and thus a description thereof will be omitted.

The transmission unit 164 transmits timing information regarding image output to the first glasses 5 and the second glasses 5'. At this time, the transmission unit 164 transmits the timing information to glasses which are powered on. As a result, the transmission unit 164 is synchronized with the glasses.

The transmission unit 164 communicates with the glasses 5 and 5' in a wired or wireless fashion.

The timing information includes timing information corresponding to output of the left eye image and the right eye image.

In a case in which the image output mode is a 3D image output mode, the transmission unit 164 transmits timing information regarding output of a left eye image to the left eye lens of the first glasses 5 and timing information regarding output of a right eye image to the right eye lens of the first glasses 5.

In addition, when the second glasses 5' are powered on, the transmission unit 164 transmits timing information regarding output of a left eye image to the left eye lens of the second glasses 5' and timing information regarding output of a right eye image to the right eye lens of the second glasses 5'.

On the other hand, in a case in which the image output mode is a multi-view image output mode, the transmission unit 164 transmits timing information regarding output of a first image of a first channel to the left eye lens and the right eye lens of the first glasses 5 and timing information regarding output of a second image of a second channel to the left eye lens and the right eye lens of the second glasses 5'.

The transmission unit 164 may transmit a screen mode input through the user interface or a screen mode detected through a detection unit to the glasses.

The first glasses 5 and the second glasses 5' are optics mechanisms to transmit and block image light output from the display module 110. The first glasses 5 and the second glasses 5' each further include a drive module 250 to drive a first shutter panel of the left eye lens and a second shutter panel of the right eye lens.

The drive module 250 includes an input unit 251, a detection unit 252, a reception unit 253, an optical controller 254, a third drive unit 255, and a fourth drive unit 256. Hereinafter, the drive module of the first glasses 5 will be described by way of example.

The input unit 251 allows input of power on and off commands, an image output mode, such as a 3D image mode or a multi-view image mode, and channel information in the multi-view image mode.

In addition, the input unit 251 allows input of a screen mode.

The detection unit 252 detects pivotal rotation of the glasses according to change in posture of a user.

That is, the detection unit 252 detects whether the display module at which the user looks straight is in a first screen mode, i.e. a landscape mode, or in a second screen mode, i.e. a portrait mode, according to posture of the user and transmits a detected signal to the optical controller 254.

In a 3D image mode, the reception unit 253 receives timing information regarding output of a left eye image and timing information regarding output of a right eye image.

The reception unit 253 communicates with the display apparatus in a wired or wireless fashion.

The reception unit 253 receives timing information regarding output of an image of a channel selected through the input unit. For example, in a case in which a first channel is selected, the reception unit 253 receives timing information regarding output of a first image of the first channel. In a case in which a second channel is selected, the reception unit 253 receives timing information regarding output of a second image of the second channel.

The reception unit 253 may receive a screen mode from the display apparatus.

In the 3D image mode, the optical controller 254 synchronizes a time when a left eye image and a right eye image are output from the display module with a time when the first shutter panel of the left eye lens and the second shutter panel of the right eye lens are powered on and off.

When the channel selected through the input unit 251 is a first channel in the multi-view image mode, the optical controller 254 synchronizes a time when an image of the first channel is output through the display module with a time when the shutter panels of the left eye lens and the right eye lens are driven on.

That is, the optical controller 254 controls the first shutter panel of the left eye lens and the second shutter panel of the right eye lens to be driven on when the image of the first channel is output through the display module and the first shutter panel of the left eye lens and the second shutter panel of the right eye lens to be driven off when the image of the second channel is output through the display module.

The optical controller 254 determines a screen mode of the display module based on the detected signal received from the detection unit 122 and controls driving of the left and right active retarder panels 510a and 510b based on the determined screen mode.

In addition, the optical controller 254 controls driving of the left and right active retarder panels 510a and 510b based on the screen mode input through the input unit 251.

The third drive unit 255 drives on or off the first shutter panel of the left eye lens and the second shutter panel of the right eye lens according to a control command of the optical controller 254.

When the first shutter panel of the left eye lens is driven on, the third drive unit 255 adjusts voltage applied to the second electrode of the first shutter panel to a low level. When the first shutter panel is driven off, the third drive unit 255 adjusts voltage applied to the second electrode of the first shutter panel to a high level. When the second shutter panel of the right eye lens is driven on, the third drive unit 255 adjusts voltage applied to the second electrode of the second shutter panel to a low level. When the second shutter panel is driven off, the third drive unit 255 adjusts voltage applied to the second electrode of the second shutter panel to a high level.

In addition, the left eye lens and the right eye lens are driven on at different times in the 3D image mode and at the same time in the multi-view image mode.

In a case in which the display module is in the first screen mode, the fourth drive unit 256 applies high voltage to the first and second active retarder panels 510a and 510b of the left and right eye lenses. In a case in which the display module is in the second screen mode, the fourth drive unit 256 applies low voltage to first and second active retarder panels 510a and 510b of the left and right eye lenses such that the incident image light has a predetermined polarization direction.

That is, even when the image light output from the display panel is incident upon the first and second active retarder panels 510a and 510b in a state that the polarization direction of the image light is changed due to pivotal rotation of the display panel, the image light transmitted through the first and second active retarder panels 510a and 510b is maintained in the predetermined polarization direction.

In addition, the left eye lens and the right eye lens are driven on at different times in the 3D image mode and at the same time in the multi-view image mode.

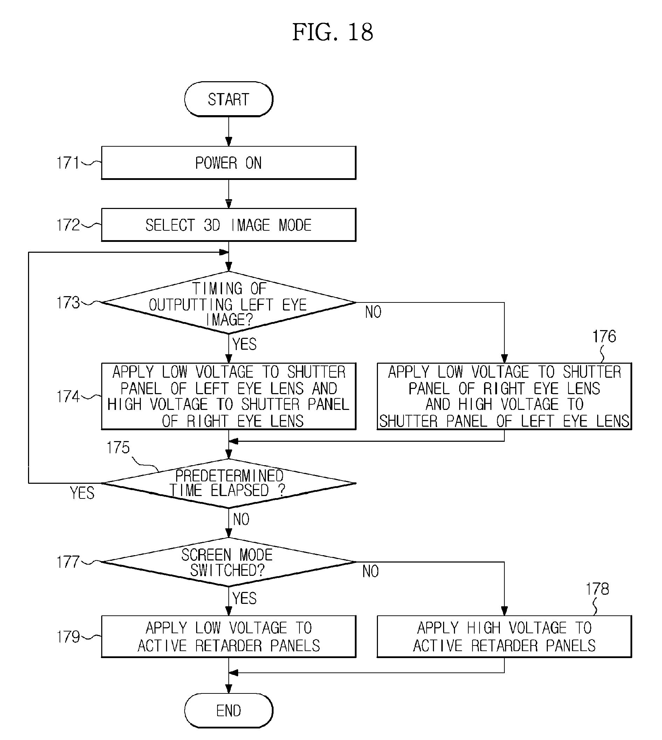

FIG. 18 is a control flowchart of the imaging system according to the embodiment of the present invention.

When the display apparatus 4 of the imaging system is powered on and an image is input through the image input unit 161, the display apparatus 4 determines whether the input image information is 2D image information or 3D image information.

In addition, the display apparatus 4 determines an image output mode to output an image input through the user interface 140.

The display apparatus 4 determines whether the determined image output mode is a 3D image mode.

When the image output mode is a 3D image mode and the image information input through the image input unit 161 is 2D image information, the display apparatus 4 converts the input 2D image information into 3D image information and separates a left eye image and a right eye image from each other based on the converted 3D image information. In addition, when the input image information is 3D image information, the display apparatus 4 separates a left eye image and a right eye image base on the 3D image information.

Subsequently, the display apparatus 4 alternately outputs the divided left eye image and right eye image through the display panel. At this time, the display apparatus 4 transmits first timing information regarding output of the left eye image and second timing information regarding output of the right eye image to the glasses 5 which have been powered on.

When the glasses 5 are powered on through the input unit 251 (171), driving power from a battery (not shown) is supplied to the glasses 5.

When the 3D image mode is selected through the input unit 251 (172), the glasses 5 receive the timing information of the image received from the display apparatus 4 and determine whether the timing information is timing information regarding output of the left eye image (173). Upon determining that the timing information is timing information regarding output of the left eye image, the glasses 5 apply low voltage to the first shutter panel 520a of the left eye lens and high voltage to the second shutter panel 520b of the right eye lens (174).

As a result, the left eye lens is driven on to transmit the image light and the right eye lens is driven off to block the image light.

After a predetermined time during which the left eye image is displayed (175), the glasses 5 receive the timing information regarding output of the right eye image from the display apparatus 4. At this time, the glasses 5 apply high voltage to the first shutter panel 520a of the left eye lens and low voltage to the second shutter panel 520b of the right eye lens (176).

As a result, the right eye lens is driven on to transmit the image light and the left eye lens is driven off to block the image light.

After a predetermined time during which the right eye image is displayed, the glasses 5 receive the timing information regarding output of the right eye image from the display apparatus 4. The left and right image light is transmitted through the above processes, whereby the user may view a 3D image.

The glasses determine whether the screen mode has been switched (177).

The determination as to whether the screen mode has been switched may be performed based on determination as to whether the glasses have been pivoted based on a signal detected by the detection unit 252 or determination as to whether switching of the screen mode of the display apparatus 4 has been input through the input unit 251.

In addition, the determination as to whether the screen mode has been switched may include receiving information regarding the screen mode from the display apparatus 4 and determining the received screen mode.

Upon determining that the screen mode has been switched, the glasses adjust voltage levels according to on and off driving of the first active retarder panel 510a of the left eye lens and the second active retarder panel 510b of the right eye lens such that the voltage levels are opposite to those before switching of the screen mode.

More specifically, upon determining that the screen mode has not been switched, high voltage is applied to the first active retarder panel 510a of the left eye lens and the second active retarder panel 510b of the right eye lens (178). Upon determining that the screen mode has been switched, low voltage is applied to the first active retarder panel 510a of the left eye lens and the second active retarder panel 510b of the right eye lens (179).

As a result, the image light transmitted through the active retarder panel of the left eye lens and the image light transmitted through the active retarder panel of the right eye lens have predetermined polarization directions.

The glasses 5 repeat the above processes until the glasses 5 are powered off through the input unit. The glasses 5 finish the above processes when the glasses 5 are powered off.

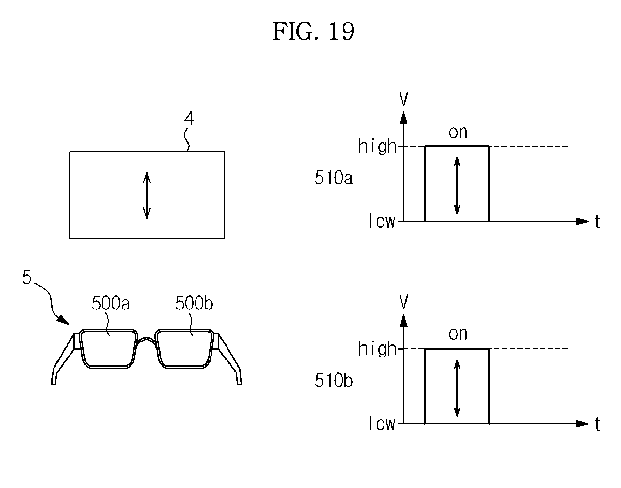

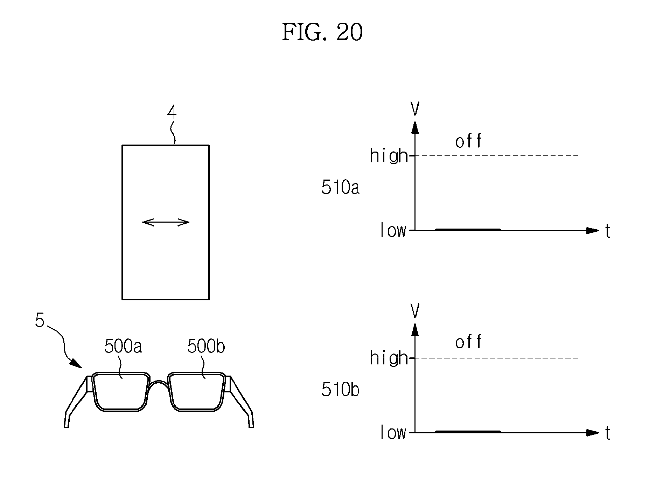

This will be described with reference to FIGS. 19 and 20.

When the display module is in a first screen mode, i.e. a landscape mode, as shown in FIG. 19, it is assumed that image light output from the display apparatus 4 has a vertical polarization direction and the polarization panels 530a and 530b have a horizontal polarization component.

When the screen mode is a landscape mode, as shown in FIG. 19, image light having a vertical polarization component is incident upon the active retarder panels 510a and 510b of the left and right eye lenses of the glasses. At this time, high voltage is applied to the active retarder panels 510a and 510b of the left and right eye lenses with the result that, according to arrangement of the liquid crystal molecules in the liquid crystal cell, the incident image light is maintained in the vertical polarization direction in the liquid crystal cell and the vertical image light is incident upon the shutter panels 520a and 520b of the left and right eye lens. When the left eye image is displayed, the light incident upon the shutter panel 520a of the left eye lens is transmitted to the left eye of the user through the polarization panel 530a in a state in which the polarization direction of the light is changed. When the right eye image is displayed, the light incident upon the shutter panel 520b of the right eye lens is transmitted to the right eye of the user through the polarization panel 530b in a state in which the polarization direction of the light is changed.

That is, low voltage is applied to the first shutter panel of the left eye lens when the left eye image is displayed and high voltage is applied to the first shutter panel of the left eye lens when the right eye image is displayed.

In addition, when the left eye image is output, image light having a vertical polarization direction is incident upon the second shutter panel 520b of the right eye lens 500b. At this time, high voltage is applied to the second shutter panel 520b with the result that, according to arrangement of the liquid crystal molecules in the liquid crystal cell, the incident image light advances straight in the vertical direction in the liquid crystal cell without change of the direction and the vertical image light is blocked by the polarization panel 530b.

When the display module is in a first screen mode, i.e. a portrait mode, as shown in FIG. 20, it is assumed that image light output from the display apparatus 4 has a horizontal polarization direction and the polarization panels 530a and 530b of the left and right eye lenses of the glasses have a horizontal polarization component.

When the screen mode is a portrait mode, as shown in FIG. 20, image light having a vertical polarization component is incident upon the active retarder panels 510a and 510b of the left and right eye lenses of the glasses. At this time, low voltage is applied to the active retarder panels 510a and 510b of the left and right eye lenses with the result that, arrangement of the liquid crystal molecules in the liquid crystal cell is changed. Consequently, the polarization of the incident image light is changed to the vertical polarization direction in the liquid crystal cell and the vertical image light is incident upon the shutter panels 520a and 520b of the left and right eye lens. When the left eye image is displayed, the light incident upon the shutter panel 520a of the left eye lens is transmitted to the left eye of the user through the polarization panel 530a in a state in which the polarization direction of the light is changed. When the right eye image is displayed, the light incident upon the shutter panel 520b of the right eye lens is transmitted to the right eye of the user through the polarization panel 530b in a state in which the polarization direction of the light is changed.

That is, low voltage is applied to the first shutter panel of the left eye lens when the left eye image is displayed and high voltage is applied to the first shutter panel of the left eye lens when the right eye image is displayed.

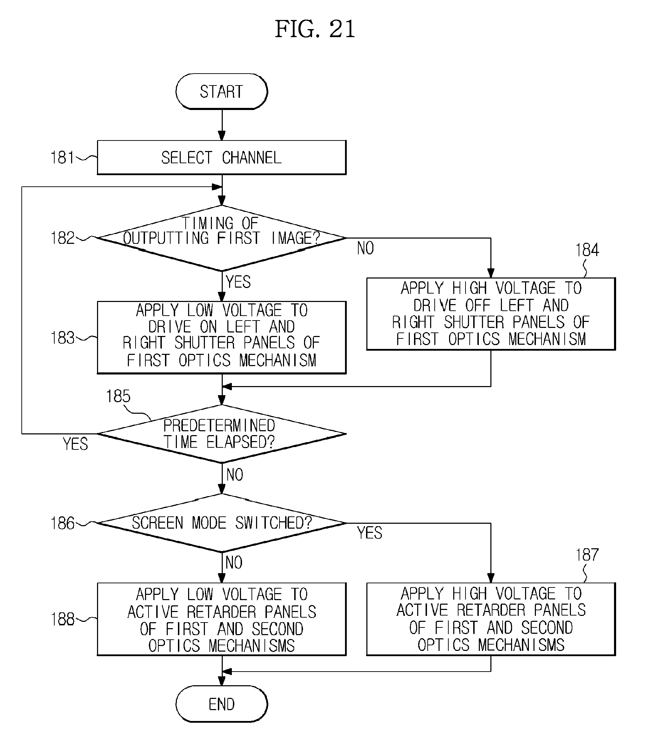

FIG. 21 is a control flowchart of the imaging system according to the embodiment of the present invention.

When the image output mode input through the user interface 140 is a multi-view image mode, the display apparatus 4 of the imaging system confirms a plurality of channels selected by a user, separates images of the confirmed first and second channels from each other, alternately outputs the separated images of the first channel and the second channel through the display panel, and transmits first timing information regarding output of the image of the first channel and second timing information regarding output of the image of the second channel to the first glasses and the second glasses.

When the first optics mechanism, i.e. the first glasses 5, and the second optics mechanism, i.e. the second glasses 5', are powered on through the input units 251 (181), driving power from batteries (not shown) is supplied to the first glasses 5 and the second glasses 5'.

When a multi-view image mode is selected through the input units, channels are selected for the first glasses 5 and the second glasses 5' (181). It is assumed that the first channel is selected for the first glasses 5 and the second channel is selected for the second glasses 5'.

The first glasses 5 synchronize a time when a first image of the first channel is output from the display apparatus 4 with a time when the first shutter panel of the left eye lens and the second shutter panel of the right eye lens are driven on.

The first glasses 5 determine whether the received timing information is timing information regarding output of the first image (182). Upon determining that the received timing information is timing information regarding output of the first image, the first glasses 5 apply low voltage to the first shutter panel 520a and the second shutter panel 520b of the left and right eye lenses to drive on the shutter panels of the left and right eye lenses.

After a predetermined time during which the first image is displayed (175), i.e. upon receiving timing information regarding output of a second image from the display apparatus 4, the first glasses 5 apply high voltage to the first shutter panel 520a and the second shutter panel 520b of the left and right eye lenses to drive off the shutter panels of the left and right eye lenses.

The above processes are repeated such that the user may view the first image of the first channel through the first glasses.

The first glasses 5 determine whether the screen mode has been switched (186).

The determination as to whether the screen mode has been switched may be performed based on determination as to whether the glasses have been pivoted based on a signal detected by the detection unit 252 or determination as to whether switching of the screen mode of the display apparatus 4 has been input through the input unit 251.

Upon determining that the screen mode has been switched, the first glasses 5 adjust voltage applied to the first active retarder panel 510a of the left eye lens and the second active retarder panel 510b of the right eye lens such that levels of the voltage are opposite to those before switching of the screen mode.

More specifically, upon determining that the timing information received from the display apparatus is timing information regarding output of the first image, high voltage is applied to the first active retarder panel and the second active retarder panel of the left and right eye lens of the first optics mechanism (187) to maintain the polarization direction of the incident image light. Upon determining that the timing information received from the display apparatus is timing information regarding output of the second image, low voltage is applied to the first active retarder panel and the second active retarder panel of the left and right eye lens of the first optics mechanism (188) to transmit the incident image light after rotating the polarization direction of the incident image light.

As a result, the image light transmitted through the first active retarder panel and the second active retarder panel of the left and right eye lens of the first optics mechanism has a predetermined polarization direction.

The first glasses 5 repeat the above processes until the first glasses 5 are powered off through the input unit. The first glasses 5 finish the above processes when the first glasses 5 are powered off.

The second glasses 5' synchronize a time when a second image of the second channel is output from the display apparatus 4 with a time when the first shutter panel of the left eye lens and the second shutter panel of the right eye lens are driven on.

The second glasses 5' determine whether the received timing information is timing information regarding output of the second image. Upon determining that the received timing information is timing information regarding output of the second image, the second glasses 5' apply low voltage to the first shutter panel and the second shutter panel of the left and right eye lenses to drive on the shutter panels of the left and right eye lenses.

Upon receiving timing information regarding output of a first image from the display apparatus 4, the second glasses 5' apply high voltage to the first shutter panel and the second shutter panel of the left and right eye lenses to drive off the shutter panels of the left and right eye lenses.

The second glasses 5' determine whether the screen mode has been switched. Upon determining that the screen mode has been switched, the second glasses 5' adjust voltage applied to the first active retarder panel of the left eye lens and the second active retarder panel of the right eye lens such that levels of the voltage are opposite to those before switching of the screen mode.

More specifically, upon determining that the timing information received from the display apparatus is timing information regarding output of the second image, high voltage is applied to the first active retarder panel and the second active retarder panel of the left and right eye lens of the second optics mechanism to maintain the polarization direction of the incident image light. Upon determining that the timing information received from the display apparatus is timing information regarding output of the first image, low voltage is applied to the first active retarder panel and the second active retarder panel of the left and right eye lens of the second optics mechanism to transmit the incident image light after rotating the polarization direction of the incident image light.

As a result, the image light transmitted through the first active retarder panel and the second active retarder panel of the left and right eye lens of the second optics mechanism has a predetermined polarization direction.

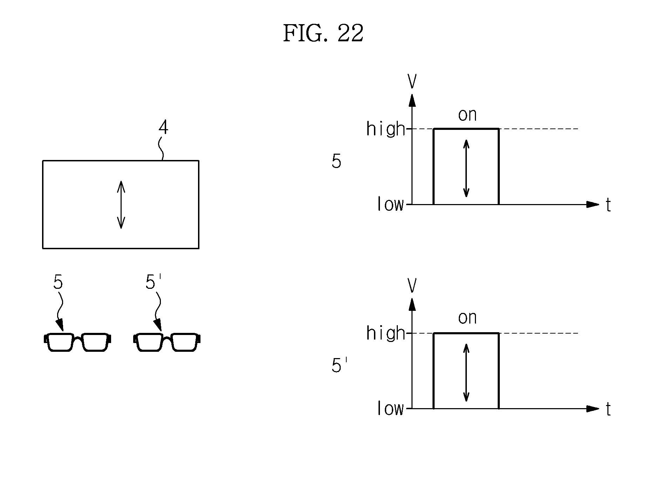

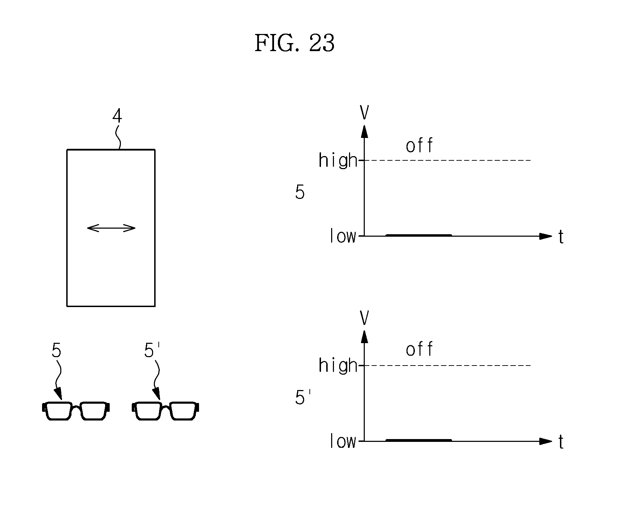

This will be described with reference to FIGS. 22 and 23.

When the display module is in a first screen mode, i.e. a landscape mode, as shown in FIG. 22, it is assumed that image light output from the display apparatus 4 has a vertical polarization direction and the polarization panels 530a and 530b have a horizontal polarization component.

As shown in FIG. 22, during odd frame times n and n+2, first image light having a vertical polarization component is incident upon the active retarder panels 510a and 510b of the left and right eye lenses of the first glasses 5. At this time, high voltage is applied to the active retarder panels 510a and 510b of the left and right eye lenses to maintain arrangement of the liquid crystal molecules in the liquid crystal cell of each active retarder panel such that the polarization direction of the incident first image light is maintained in the vertical direction in the liquid crystal cell. The polarization direction of the vertical first image light is rotated by each shutter panel and then the first image light is transmitted to the two eyes of the user through the polarization panels.

During even frame times n+1 and n+3, second image light having a vertical polarization component is incident upon the active retarder panels 510a and 510b of the left and right eye lenses of the first glasses 5. At this time, high voltage is applied to the active retarder panels 510a and 510b of the left and right eye lenses to maintain arrangement of the liquid crystal molecules in the liquid crystal cell of each active retarder panel such that the polarization direction of the incident first image light is maintained in the vertical direction in the liquid crystal cell. The vertical second image light is transmitted through each shutter panel in a state in which the polarization direction of the image light is maintained. Subsequently, the second image light is blocked by the polarization panels. That is, the vertical second image light is blocked by the polarization panels with the result that the vertical second image light is not transmitted to the two eyes of the user.

On the other hand, during odd frame times n and n+2, first image light having a vertical polarization component is incident upon the active retarder panels of the left and right eye lenses of the second glasses 5'. At this time, high voltage is applied to the active retarder panels of the left and right eye lenses to maintain arrangement of the liquid crystal molecules in the liquid crystal cell of each active retarder panel such that the polarization direction of the incident first image light is maintained in the vertical direction in the liquid crystal cell. The vertical first image light is transmitted through each shutter panel in a state in which the polarization direction of the image light is maintained. Subsequently, the first image light is blocked by the polarization panels. That is, the vertical first image light is blocked by the polarization panels with the result that the vertical first image light is not transmitted to the two eyes of the user.

During even frame times n+1 and n+3, second image light having a vertical polarization component is incident upon the active retarder panels of the left and right eye lenses of the second glasses 5'. At this time, high voltage is applied to the active retarder panels 510a and 510b of the left and right eye lenses to maintain arrangement of the liquid crystal molecules in the liquid crystal cell of each active retarder panel such that the polarization direction of the incident second image light is maintained in the vertical direction in the liquid crystal cell. The polarization direction of the vertical second image light is rotated by each shutter panel and then the second image light is transmitted to the two eyes of the user through the polarization panels.

When the screen mode of the display module is switched to a second screen mode, i.e. a portrait mode, as shown in FIG. 23, it is assumed that image light output from the display apparatus 4 has a horizontal polarization direction and the polarization panels 530a and 530b of the left and right eye lenses of the glasses have a horizontal polarization component.

As shown in FIG. 23, during odd frame times n and n+2, first image light having a horizontal polarization component is incident upon the active retarder panels 510a and 510b of the left and right eye lenses of the first glasses 5. At this time, low voltage is applied to the active retarder panels 510a and 510b of the left and right eye lenses to change arrangement of the liquid crystal molecules in the liquid crystal cell of each active retarder panel such that the polarization direction of the incident first image light is changed to the vertical direction in the liquid crystal cell. The polarization direction of the vertical first image light is rotated by each shutter panel and then the first image light is transmitted to the two eyes of the user through the polarization panels.

During even frame times, second image light having a horizontal polarization component is incident upon the active retarder panels 510a and 510b of the left and right eye lenses of the first glasses 5. At this time, low voltage is applied to the active retarder panels 510a and 510b of the left and right eye lenses to change arrangement of the liquid crystal molecules in the liquid crystal cell of each active retarder panel such that the polarization direction of the incident second image light is changed to the vertical direction in the liquid crystal cell. The vertical second image light is transmitted through each shutter panel in a state in which the polarization direction of the image light is maintained. Subsequently, the second image light is blocked by the polarization panels. That is, the vertical second image light is blocked by the polarization panels with the result that the vertical second image light is not transmitted to the two eyes of the user.

On the other hand, during odd frame times n and n+2, first image light having a horizontal polarization component is incident upon the active retarder panels of the left and right eye lenses of the second glasses 5'. At this time, low voltage is applied to the active retarder panels 510a and 510b of the left and right eye lenses to change arrangement of the liquid crystal molecules in the liquid crystal cell of each active retarder panel such that the polarization direction of the incident first image light is changed to the vertical direction in the liquid crystal cell. The vertical first image light is transmitted through each shutter panel in a state in which the polarization direction of the image light is maintained. Subsequently, the first image light is blocked by the polarization panels. That is, the vertical first image light is blocked by the polarization panels with the result that the vertical first image light is not transmitted to the two eyes of the user.

During even frame times, second image light having a horizontal polarization component is incident upon the active retarder panels of the left and right eye lenses of the second glasses 5'. At this time, low voltage is applied to the active retarder panels 510a and 510b of the left and right eye lenses to maintain arrangement of the liquid crystal molecules in the liquid crystal cell of each active retarder panel such that the polarization direction of the incident second image light is maintained in the vertical direction in the liquid crystal cell. The polarization direction of the vertical second image light is rotated by each shutter panel and then the second image light is transmitted to the two eyes of the user through the polarization panels.

In a case in which the display apparatus 4 displays a 3D image in a spatial division manner, the active type glasses 5 and 5' may differently control the polarization direction per vertical line or horizontal line.

In addition, when the screen mode is switched, the glasses 5 and 5' may control the polarization direction per vertical line and then control the polarization direction per horizontal line.

As is apparent from the above description, a user may view a 3D image or a multi-view image even when the display apparatus is pivoted.

In addition, the user may view the image displayed on the display apparatus as a 3D image or a multi-view image even when the angle of the optics mechanism, i.e. the glasses, is changed by 90 degrees according to change in posture of the user.

Consequently, the user may view the display apparatus in a comfortable posture, whereby user satisfaction is improved.

In addition, plural users may view images of different channels at full scale using one display apparatus without deterioration of resolution.

Although a few embodiments of the present invention have been shown and described, it would be appreciated by those skilled in the art that changes may be made in these embodiments without departing from the invention, the scope of which is defined in the claims.

## Claims

1. A display apparatus comprising:
a display module having a display panel and an active retarder panel disposed at a front of the display panel to adjust a polarization direction of image light output from the display panel and incident upon the active retarder panel such that the image light is transmitted through the active retarder panel; and
a drive module to determine whether the display module has been pivoted and to control, upon determining that the display module has been pivoted, voltage applied to the active retarder panel such that the polarization direction is adjusted.

2. The display apparatus according to claim 1, further comprising:
a user interface to allow input of a three-dimensional (3D) image mode and a multi-view image mode, wherein
in a case in which an image output mode of the display module is the 3D image mode, the drive module drives the display panel such that a left eye image and a right eye image are displayed on the display panel through time division and, in a case in which an image output mode of the display module is the multi-view image mode, the drive module drives the display panel such that an image of a first channel and an image of a second channel are displayed on the display panel through time division.

3. The display apparatus according to claim 1, further comprising:
a detection unit to detect pivotal rotation of the display module; and
a user interface to allow input of pivotal rotation of the display module, wherein
the drive module determines whether the display module has been pivoted based on a detected signal of the detection unit and determines that the display module has been pivoted when the pivotal rotation of the display module is input through the user interface.

4. The display apparatus according to claim 1, wherein
upon determining that the display module has been pivoted, the drive module determines that a screen mode of the display module has been switched from a first screen mode to a second screen mode and, in the second screen mode, switches an image of the display panel from a first display mode to a second display mode and applies first voltage to the active retarder panel to change the polarization direction of the image light from a first polarization direction to a second polarization direction, and
upon determining that the screen mode of the display module is the first screen mode, the drive module switches the image of the display panel to the first display mode and applies second voltage to the active retarder panel to change the polarization direction of the image light from the second polarization direction to the first polarization direction.

5. The display apparatus according to claim 1, wherein
the drive module displays a first image and a second image on the display panel through spatial division and adjusts voltage applied per odd and even lines such that a polarization component of a first polarization direction and a polarization component of a second polarization direction are provided to the active retarder through the spatial division, and
in a case in which the screen mode of the display module is a first screen mode, the drive module adjusts voltage applied per odd and even lines in a first direction and, in a case in which the screen mode of the display module is a second screen mode corresponding to the pivotal rotation, the drive module adjusts voltage applied per odd and even lines in a second direction, the first direction and the second direction being perpendicular to each other.

6. The display apparatus according to claim 1, further comprising an optics mechanism comprising:
a first lens and a second lens, each of the first and second lenses having an active retarder panel, upon which the image light output from the display apparatus is incident, to adjust a polarization direction of the incident image light in response to a screen mode of the display apparatus such that the image light is transmitted through the active retarder panel, a shutter panel, upon which the image light transmitted through the active retarder panel is incident, to selectively transmit the image light in response to type of an image output from the display apparatus, and a polarization panel to selectively transmit the image light transmitted through the shutter panel; and
a drive module to adjust the polarization direction of the image light transmitted through each active retarder panel based on the screen mode of the display apparatus, to receive timing information regarding output of a first image and a second image output from the display apparatus, and to control voltage applied to the shutter panel of the first lens and the shutter panel of the second lens based on the received timing information regarding output of the first image and the second image such that the polarization direction of the image light transmitted through each shutter panel is adjusted.

7. The display apparatus according to claim 6, further comprising:
a detection unit provided at the optics mechanism to detect pivotal rotation of the first lens and the second lens; and
an input unit provided at the optics mechanism to allow input of pivotal rotation of the display module, wherein
upon detecting the pivotal rotation of the first lens and the second lens, the drive module of the optics mechanism controls voltage applied to each active retarder panel to change the polarization direction by 90 degrees and controls voltage applied to each active retarder panel to change the polarization direction by 90 degrees when the pivotal rotation of the display module is input.

8. The display apparatus according to claim 7, further comprising:
an input unit provided at the optics mechanism to allow input of a 3D image mode or a multi-view image mode, wherein
the drive module of the optics mechanism alternately drives on the shutter panel of the first lens and the shutter panel of the second lens when the 3D image mode is input and simultaneously drives on the shutter panel of the first lens and the shutter panel of the second lens when the multi-view image mode is input, and
the drive module of the optics mechanism applies first voltage to the shutter panel of the first lens when the first lens is driven on and the first voltage to the shutter panel of the second lens when the second lens is driven on, the shutter panel of the first lens and the shutter panel of the second lens being alternately driven on.

9. The display apparatus according to claim 8, wherein the drive module of the optics mechanism applies second voltage to the shutter panel of the first lens when the first lens is driven off and the second voltage to the shutter panel of the second lens when the second lens is driven off, the shutter panel of the first lens and the shutter panel of the second lens being alternately driven off.

10. The display apparatus according to claim 9, wherein
the input unit of the optics mechanism allows input of any one of first and second channels in the multi-view image mode, and
the drive module of the optics mechanism applies first voltage to the shutter panel of the first lens and the shutter panel of the second lens when the first lens and the second lens are driven on, the shutter panel of the first lens and the shutter panel of the second lens being simultaneously driven on, and applies second voltage to the shutter panel of the first lens and the shutter panel of the second lens when the first lens and the second lens are driven off, the shutter panel of the first lens and the shutter panel of the second lens being simultaneously driven off.

11. The display apparatus according to claim 10, wherein the drive module of the optics mechanism drives on the shutter panel of the first lens and the shutter panel of the second lens at timing of outputting an image of the input channel and drives off the shutter panel of the first lens and the shutter panel of the second lens at timing of outputting an image of the channel different from the input channel.

12. A control method of a display apparatus comprising:
allowing input of an image output mode to be output through a display panel;
in a case in which the image output mode is a 3D image mode or a multi-view image mode, alternately outputting a first image and a second image output through the display panel in a first display mode through time division;
applying first voltage to an active retarder panel such that image light of the display panel incident upon the active retarder panel is transmitted in a first polarization direction;
determining whether the display panel has been pivoted;
upon determining that the display module has been pivoted and thus a screen mode of the display panel has been switched from a first screen mode to a second screen mode, alternately outputting the first image and the second image in a second display mode through time division; and
applying second voltage higher than the first voltage applied to the active retarder panel such that the image light of the display panel incident upon the active retarder panel is transmitted in a second polarization direction.

13. The control method according to claim 12, wherein the first polarization direction and the second polarization direction are perpendicular to each other.

14. The control method according to claim 13, further comprising:
displaying a left eye image as the first image and a right eye image as the second image through time division in a case in which the image output mode is the 3D image mode; and
displaying an image of a first channel as the first image and an image of a second channel as the second image through time division in a case in which the image output mode is the multi-view image mode.

15. The control method according to claim 12, further comprising:
determining whether the image output mode is the 3D image mode or the multi-view image mode;
determining whether an optics mechanism has been pivoted;
upon determining that the optics mechanism has not been pivoted in the 3D image mode, adjusting voltage applied to an active retarder panel of a left eye lens and an active retarder panel of a right eye lens to a first level to drive on a shutter panel of the left eye lens and a shutter panel of the right eye lens, upon determining that the optics mechanism has been pivoted in the 3D image mode, adjusting voltage applied to the shutter panel of the left eye lens and the shutter panel of the right eye lens to a second level to drive on the active retarder panel of the left eye lens and the active retarder panel of the right eye lens, and alternately driving on the shutter panel of the left eye lens and the shutter panel of the right eye lens based on timing of outputting the left eye image and timing of outputting the right eye image; and
upon determining that the optics mechanism has not been pivoted in the multi-view image mode, adjusting voltage applied to the active retarder panel of the left eye lens and the active retarder panel of the right eye lens to the first level, upon determining that the optics mechanism has been pivoted in the multi-view image mode, adjusting voltage applied to the active retarder panel of the left eye lens and the active retarder panel of the right eye lens to the second level, and simultaneously driving on a shutter panel of the left eye lens and a shutter panel of the right eye lens based on timing of outputting the image of the first channel and timing of outputting the image of the second channel such that the shutter panel of the left eye lens and the shutter panel of the right eye lens are simultaneously driven on at timing of outputting an image of the selected channel and the shutter panel of the left eye lens and the shutter panel of the right eye lens simultaneously driven off at timing of outputting an image of the channel different from the selected channel,
the voltage of the first level being lower than the voltage of the second level.
